(19) Europäisches Patentamt
European Patent Office
Office européen des brevets

(11) **EP 4 668 983 A1**

(12) **EUROPEAN PATENT APPLICATION**
published in accordance with Art. 153(4) EPC

(43) Date of publication:
**24.12.2025 Bulletin 2025/52**

(21) Application number: **24785288.2**

(22) Date of filing: **05.04.2024**

(51) International Patent Classification (IPC):
***H04W 72/232*** *(2023.01)* ***H04W 72/04*** *(2023.01)*
***H04W 72/0457*** *(2023.01)* ***H04W 72/12*** *(2023.01)*
***H04W 52/14*** *(2009.01)* ***H04W 52/32*** *(2009.01)*
***H04W 52/54*** *(2009.01)* ***H04L 27/26*** *(2006.01)*

(52) Cooperative Patent Classification (CPC):
**H04L 27/26; H04W 52/14; H04W 52/32; H04W 52/54; H04W 72/04; H04W 72/0457; H04W 72/12; H04W 72/232**

(86) International application number:
**PCT/KR2024/004470**

(87) International publication number:
**WO 2024/210588 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 KR 20230046293**

(71) Applicant: **Samsung Electronics Co., Ltd.**
**Suwon-si, Gyeonggi-do 16677 (KR)**

(72) Inventors:
- **CHOI, Kyungjun**
  **Suwon-si, Gyeonggi-do 16677 (KR)**
- **LIM, Seongmok**
  **Suwon-si, Gyeonggi-do 16677 (KR)**
- **JANG, Youngrok**
  **Suwon-si, Gyeonggi-do 16677 (KR)**
- **JI, Hyoungju**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND DEVICE FOR DETERMINING SCHEDULED CELL IN COMMUNICATION SYSTEM

(57) The present disclosure relates to a 5G or 6G communication system for supporting higher data transmission rates. The present disclosure relates to the operation of a terminal and a base station in a wireless communication system. The present disclosure relates to a method and device for a terminal to transmit and receive data through a plurality of cells by using one piece of downlink control information. The method performed by the terminal in the communication system according to an embodiment of the present disclosure comprises the steps of: receiving information related to a scheduled cell set through upper layer signaling; receiving downlink control information (DCI), wherein the DCI includes a bandwidth part (BWP) indicator field and a frequency domain resource assignment (FDRA) field; identifying, on the basis of the FDRA field, a serving cell to be applied to the BWP indicator field among a plurality of serving cells included in the scheduled cell set; and applying the BWP indicator field to the serving cell.

FIG. 14

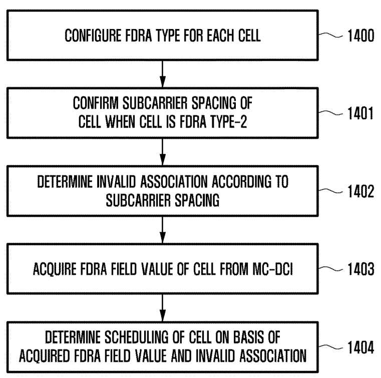


EP 4 668 983 A1

## Description

### [Technical Field]

The present disclosure relates to operations of a terminal and a base station in a communication system. More particularly, the present disclosure relates to a method and device for a terminal to transmit and receive data through a plurality of cells by using one piece of downlink control information.

### [Background Art]

5G mobile communication technology defines a wide frequency band to enable fast transmission speed and new services, and can be implemented not only in sub 6GHz bands, such as 3.5 gigahertz (3.5GHz), but also in ultra-high frequency band ('above 6GHz') known as millimeter wave (mmWave), such as 28GHz and 39GHz. In addition, 6G mobile communication technology, which is called a system beyond 5G, is being considered to be implemented in a terahertz band (e.g., from 95GHz to 3 terahertz (3THz) band) to achieve a data rate 50 times faster and an ultra low-latency time reduced to one-tenth, compared to the 5G mobile communication technology.

The goal in the early stage of the 5G mobile communication technology is to support services and meet performance requirements for enhanced mobile broadband (eMBB), ultra-reliable low-latency communications (URLLC), and massive machine-type communications (mMTC). To achieve the goal, standardization is underway for beamforming and massive MIMO to mitigate path loss and increase a propagation range of radio waves in an ultra-high frequency band, support for various numerologies (such as an operation of multiple subcarrier spacings) and dynamic operation of slot formats for efficient utilization of ultra-high frequency resources, initial access technologies to support multibeam transmission and wideband, definition and operation of a bandwidth part (BWP), new channel coding methods such as a low density parity check (LDPC) code for large-capacity data transmission and a polar code for high reliable transmission of control information, L2 pre-processing, network slicing to provide dedicated networks specialized to specific services, etc.

Currently, discussions are underway for improvement and performance enhancement of the initial 5G mobile communication technology in consideration of services that the 5G mobile communication technology is intended to support. Physical layer standardization is underway for technologies such as vehicle-to-everything (V2X), which assists in driving decisions of autonomous vehicles and enhances user convenience based on their own location and status information transmitted by vehicles, new radio unlicensed (NR-U), which aims for system operation meeting various regulatory requirements in unlicensed bands, NR UE power saving, a non-terrestrial network (NTN), which is direct UE-satellite communication to secure coverage in areas where communication with terrestrial networks is impossible, and positioning.

In addition, standardization of wireless interface architecture/protocol fields is also underway for technologies such as intelligent factories (industrial Internet of Things, IIoT) that support new services through integration and convergence with other industries, integrated access and backhaul (IAB) that provides nodes to extend network service area by integrating and supporting a wireless backhaul link and an access link, mobility enhancement including conditional handover and dual active protocol stack (DAPS) handover, and 2-step RACH for NR that simplifies a random access procedure, and standardization of system architecture/service fields is also underway for 5G baseline architecture (e.g., service based architecture, service based interface) for combining network functions virtualization (NFV) and software-defined networking (SDN) technologies, mobile edge computing (MEC) that receives services based on a location of a UE, etc.

When such 5G mobile communication systems are commercialized, connected devices, experiencing explosive growth, will be linked to communication networks. Therefore, it is expected that the enhancement of the functions and performance of 5G mobile communication systems and the integrated operation of connected devices will be required. To this end, new research is scheduled to be conducted on eXtended reality (XR) to efficiently support augmented reality (AR), virtual reality (VR), mixed reality (MR), etc., enhancing 5G performance and reducing complexity through artificial intelligence (AI) and machine learning (ML), supporting AI services, supporting metaverse services, drone communications, etc.

In addition, the advancement of the 5G mobile communication systems may provide the foundation for the development of not only multi-antenna transmission technology such as new waveforms, full-dimensional multiple-input multiple-output (Full Demensional MIMO: FD-MIMO), array antennas, and large-scale antennas to ensure coverage in terahertz band, high-dimensional spatial multiplexing technology using metamaterial-based lenses and antennas, orbital angular momentum (OAM) to enhance the coverage of terahertz band signals, and reconfigurable intelligent surface (RIS) technology of 6G mobile communication technologies, but also full-duplex technology to enhance frequency efficiency and improve system networks, AI-based communication technologies that utilize satellites and artificial intelligence (AI) from the design stage and incorporate end-to-end AI support functions to realize system optimization, and next-generation distributed computing technologies that utilize ultra-high-performance communication and computing resources to realize highly complex services beyond the limitations of UE computing capabilities,etc. of 6G mobile communication technologies.

With the advancement of the wireless communication systems as described above, various services may be provided. Accordingly, measures are required to smoothly provide these services.

**[Disclosure of Invention]**

**[Technical Problem]**

Various embodiments of the present disclosure are directed to providing a device and method for effectively providing services in a wireless communication system.

The technical problems to be achieved in various embodiments of the present disclosure are not limited to those mentioned above, and other technical problems not mentioned may be considered by those skilled in the art from various embodiments of the present disclosure to be described below.

**[Solution to Problem]**

The present disclosure proposes a method and device for determining a scheduled cell in a communication system. The present disclosure proposes a method for indicating a scheduled cell in a DCI that schedules a plurality of cells.

According to an embodiment of the present disclosure, a method performed by a user equipment (UE) in a communication system includes receiving, via higher layer signaling, information associated with a scheduled cell set; receiving downlink control information (DCI), wherein the DCI includes a bandwidth part (BWP) indicator field and a frequency domain resource assignment (FDRA) field; identifying, based on the FDRA field, a serving cell to be applied to the BWP indicator field among a plurality of serving cells included in the scheduled cell set; and applying the BWP indicator field to the serving cell.

According to an embodiment of the present disclosure, wherein the FDRA field includes a plurality of fields associated with the plurality of serving cells.

According to an embodiment of the present disclosure, wherein in case that a resource allocation type is set to type-0, the serving cell is associated with a field in which one or more bits are ’1’ among the plurality of fields.

According to an embodiment of the present disclosure, wherein in case that the resource allocation type is set to type-1, the serving cell is associated with a field in which one or more bits are ’0’ among the plurality of fields.

According to an embodiment of the present disclosure, wherein in case that the resource allocation type is set to type-2 and a subcarrier spacing (SCS) configuration of the serving cell is 0, the serving cell is associated with a field in which one or more bits are ’0’ among the plurality of fields.

According to an embodiment of the present disclosure, wherein in case that the resource allocation type is set to type-2 and the SCS configuration of the serving cell is 1, the serving cell is associated with a field in which one or more bits are ’1 ’ among the plurality of fields.

According to an embodiment of the present disclosure, wherein the DCI further includes a scheduled cell indicator.

According to an embodiment of the present disclosure, wherein a table corresponding to the scheduled cell indicator is configured based on information associated with the scheduled cell set.

According to an embodiment of the present disclosure, each row of the table includes a plurality of scheduled cells.

According to an embodiment of the present disclosure, wherein the plurality of serving cells are a plurality of scheduled cells included in a row corresponding to an index indicated by the scheduled cell indicator.

According to an embodiment of the present disclosure, wherein the BWP indicator field is not applied to remaining serving cells, excluding the one or more serving cells from among the plurality of serving cells.

According to an embodiment of the present disclosure, a user equipment (UE) in a communication system includes: a transceiver; and a processor coupled with the transceiver, wherein the processor is configured to: receive, via higher layer signaling, information associated with a scheduled cell set; receive downlink control information (DCI), wherein the DCI includes a bandwidth part (BWP) indicator field and a frequency domain resource assignment (FDRA) field; identify, based on the FDRA field, a serving cell to be applied to the BWP indicator field among a plurality of serving cells included in the scheduled cell set; and apply the BWP indicator field to the serving cell.

According to an embodiment of the present disclosure, A method performed by a base station in a communication system, the method comprising: transmitting, via higher layer signaling, information associated with a scheduled cell set; and transmitting downlink control information (DCI), wherein the DCI includes a bandwidth part (BWP) indicator field and a frequency domain resource assignment (FDRA) field, and wherein the BWP indicator field is for a serving cell associated with the FDRA field among a plurality of serving cells included in the scheduled cell set.

According to an embodiment of the present disclosure, wherein the FDRA field includes a plurality of fields associated with the plurality of serving cells.

According to an embodiment of the present disclosure, wherein in case that a resource allocation type is set to type-0, the serving cell is associated with a field in which one or more bits are '1' among the plurality of fields.

According to an embodiment of the present disclosure, wherein in case that the resource allocation type is set to type-1, the serving cell is associated with a field in which one or more bits are '0' among the plurality of fields.

According to an embodiment of the present disclosure, wherein in case that the resource allocation type is set to type-2 and a subcarrier spacing (SCS) configuration of the serving cell is 0, the serving cell is associated with a field in which one or more bits are '0' among the plurality of fields.

According to an embodiment of the present disclosure, wherein in case that the resource allocation type is set to type-2 and the SCS configuration of the serving cell is 1, the serving cell is associated with a field in which one or more bits are '1' among the plurality of fields.

According to an embodiment of the present disclosure, wherein the DCI further includes a scheduled cell indicator.

According to an embodiment of the present disclosure, wherein a table corresponding to the scheduled cell indicator is configured based on information associated with the scheduled cell set, and each row of the table includes a plurality of scheduled cells.

According to an embodiment of the present disclosure, wherein the plurality of serving cells are a plurality of scheduled cells included in a row corresponding to an index indicated by the scheduled cell indicator.

According to an embodiment of the present disclosure, wherein the BWP indicator field is not associated with remaining serving cells, excluding the one or more serving cells from among the plurality of serving cells.

According to an embodiment of the present disclosure, a base station in a communication system includes: a transceiver; and a processor coupled with the transceiver, wherein the processor is configured to: transmit, via higher layer signaling, information associated with a scheduled cell set; and transmit downlink control information (DCI), wherein the DCI includes a bandwidth part (BWP) indicator field and a frequency domain resource assignment (FDRA) field, and wherein the BWP indicator field is for a serving cell associated with the FDRA field among a plurality of serving cells included in the scheduled cell set.

**[Advantageous Effects of Invention]**

Various embodiments of the present disclosure provide the device and method for effectively providing services in a wireless communication system.

The effects obtained from various embodiments of the present disclosure are not limited to the effects mentioned above, and other effects not mentioned may be clearly derived and understood by those skilled in the art based on the detailed description below.

**[Brief Description of Drawings]**

FIG. 1 is a diagram illustrating a basic structure of a time-frequency domain in a wireless communication system according to an embodiment of the present disclosure.

FIG. 2 is a diagram illustrating a structure of a frame, a subframe, and a slot in the wireless communication system according to an embodiment of the present disclosure.

FIG. 3 is a diagram illustrating an example of a bandwidth part configuration in the wireless communication system according to an embodiment of the present disclosure.

FIG. 4 is a diagram illustrating an example of a control resource set configuration for a downlink control channel in the wireless communication system according to an embodiment of the present disclosure.

FIG. 5 is a diagram illustrating a structure of the downlink control channel in the wireless communication system according to an embodiment of the present disclosure.

FIG. 6 is a diagram for describing a method for a base station and a UE to transmit and receive data in consideration of a downlink data channel and rate matching resources in the wireless communication system according to an embodiment of the present disclosure.

FIG. 7 is a diagram illustrating an example of frequency axis (domain) resource assignment for PDSCH in the wireless communication system according to an embodiment of the present disclosure.

FIG. 8 is a diagram illustrating an example of time axis (domain) resource assignment for PDSCH in the wireless communication system according to an embodiment of the present disclosure.

FIG. 9 is a diagram illustrating an example of time axis resource assignment according to subcarrier spacing of a data channel and a control channel in the wireless communication system according to an embodiment of the present disclosure.

FIG. 10 is a diagram illustrating a wireless protocol structure between a base station and a UE in a single cell, carrier aggregation, and dual connectivity situation in the wireless communication system according to an embodiment of the present disclosure.

FIG. 11 is a diagram illustrating an example in which MC-DCI includes a plurality of FDRA fields according to an embodiment of the present disclosure.

FIG. 12 is a diagram illustrating an example of determining cells that are actually co-scheduled based on the plurality of FDRA fields included in the MC-DCI according to an embodiment of the present disclosure.

FIG. 13 is a diagram illustrating an example of a field indicating frequency domain resource assignment information depending on subcarrier spacing of cells according to an embodiment of the present disclosure.

FIG. 14 is a flowchart illustrating a method for determining scheduled cells by UE according to an embodiment of the present disclosure.

FIG. 15 is a diagram illustrating an example in which a UE applies different fields of the MC-DCI to scheduled cells and unscheduled cells according to an embodiment of the present disclosure.

FIG. 16 is a diagram illustrating a structure of a UE in the wireless communication system according to an embodiment of the present disclosure.

FIG. 17 is a diagram illustrating a structure of a base station in the wireless communication system according to an embodiment of the present disclosure.

**[Mode for the Invention]**

Hereinafter, exemplary embodiments of the present disclosure will be described in detail with reference to the accompanying drawings.

In describing the embodiments, descriptions of technical contents that are well known in the technical field to which the present disclosure pertains and are not directly related to the present disclosure will be omitted. This is to more clearly convey the gist of the present disclosure without ambiguity by omitting unnecessary explanations.

For the same reason, some components in the accompanying drawings are exaggerated, omitted, or schematically illustrated. In addition, the size of each component does not entirely reflect the actual size. The same reference numerals are assigned to the same or corresponding components in each drawing.

Various advantages and features of the present disclosure and methods accomplishing them will become apparent from the following description of embodiments with reference to the accompanying drawings. However, the present disclosure is not limited to exemplary embodiments to be described below, but may be implemented in various different forms, these exemplary embodiments will be provided only in order to make the present disclosure complete and allow those skilled in the art to completely recognize the scope of the present disclosure, and the present disclosure will be defined by the scope of the claims. Throughout the specification, like reference numerals denote like components. In describing the present disclosure, when it is decided that a detailed description for the functions or configurations related to the present disclosure may unnecessarily obscure the gist of the present disclosure, the detailed description therefor will be omitted. Further, the following terms are defined in consideration of the functions in the present disclosure and may be construed in different ways by the intention of users and operators or practice, etc. Therefore, the definitions thereof should be construed based on the contents throughout the specification.

Hereinafter, a base station is an entity that performs resource assignment of a terminal, and may be at least one of a gNode B, an eNode B, a Node B, a base station (BS), a wireless access unit, a base station controller, or a node on a network. The terminal may include user equipment (UE), a mobile station (MS), a cellular phone, a smartphone, a computer, or a multimedia system capable of performing a communication function. In the present disclosure, downlink (DL) refers to a wireless transmission path of a signal transmitted from a base station to a terminal, and uplink (UL) refers to a wireless transmission path of a signal transmitted from a terminal to a base station. In addition, although an LTE or LTE-A system may be described below as an example, embodiments of the present disclosure may also be applied to other communication systems having a similar technical background or channel type. For example, the 5th generation mobile communication technology (5G, new radio, NR) developed after LTE-A may be included in such other communication systems, and the 5G below may also be a concept that includes the existing LTE, LTE-A, and other similar services. In addition, the present disclosure may be applied to other communication systems through certain modifications, as determined by those skilled in the art, without significantly departing from the scope of the present disclosure.

In this case, it will be appreciated that each block of processing flowcharts and combinations of the flowcharts may be executed by computer program instructions. Since these computer program instructions may be mounted in a processor of a general computer, a special computer, or other programmable data processing apparatuses, these computer program instructions executed through the process of the computer or the other programmable data processing apparatuses create means performing functions described in a block(s) of the flowchart. Since these computer program instructions may also be stored in a computer usable or computer readable memory that may be directed to a computer or other programmable data processing apparatuses in order to implement the functions in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may represent some of modules, segments, or codes including one or more executable instructions for executing a specific logical function(s). Further, it is to be noted that functions mentioned in the blocks occur regardless of a sequence in some alternative embodiments. For example, two blocks that are continuously illustrated may be simultaneously performed in fact or be performed in a reverse sequence depending on corresponding functions.

In this case, the term '~unit' used in the present embodiment means software or hardware components such as field programmable gate array (FPGA) or application specific integrated circuit (ASIC), and the '~unit' performs certain roles. However, the '~unit' is not meant to be limited to the software or hardware. The '~unit' may be configured to be stored in a storage medium that can be addressed or may be configured to reproduce one or more processors. Accordingly, as an example, the '~unit' includes to components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit'. In addition, components and '~ units' may be implemented to reproduce one or more CPUs in a device or a secure multimedia card. In addition, in an embodiment, the '~unit' may include one or more processors.

Wireless communication systems have evolved from their initial voice-centric services to broadband wireless communication systems that provide high-speed, high-quality packet data services, such as 3GPP's high speed packet access (HSPA), long term evolution (LTE) (or evolved universal terrestrial radio access (E-UTRA)), LTE-advanced (LTE-A), LTE-Pro, 3GPP2's high rate packet data (HRPD), ultra mobile broadband (UMB), and IEEE's 802.16e.

As a representative example of these broadband wireless communication systems, for the LTE system, orthogonal frequency division multiplexing (OFDM) is employed in downlink (DL) and single carrier frequency division multiple access (SC-FDMA) is employed in uplink (UL). The uplink refers to a wireless link through which a terminal (user equipment (UE) or mobile station (MS)) transmits data or control signals to a base station (eNode B or base station (BS)), and the downlink refers to a wireless link through which a base station transmits data or control signals to a terminal. The multiple access scheme as described above typically allocates and operates time-frequency resources to carry and transmit data or control information to each user so that the time-frequency resources do not overlap, i.e., orthogonality is ensured, thereby allowing the data or control information of each user to be distinguished.

The future communication systems beyond LTE, that is, the 5G communication systems should be able to freely reflect various requirements of users and service providers. Therefore, services simultaneously satisfying various requirements should be supported. The services being considered for the 5G communication systems include enhanced mobile broadband (eMBB), massive machine type communication (mMTC), ultra reliability low latency communication (URLLC), etc.

The eMBB aims to provide a data transmission speed that is even higher than that supported by existing LTE, LTE-A, or LTE-Pro. For example, in the 5G communication system, the eMBB should be able to provide a peak data rate of 20 Gbps in the downlink and a peak data rate of 10 Gbps in the uplink from the viewpoint of a single base station. In addition, the 5G communication systems should provide not only the peak data rate but also an increased user-perceived data rate of a terminal. To meet these requirements, there is a need to improve various transmission and reception technologies, including more enhanced multi-input multi-output (MIMO) transmission technology. Furthermore, LTE transmits signals using a maximum transmission bandwidth of 20MHz in the 2GHz band, while 5G communication systems may satisfy data transmission speed required by the 5G communication systems by using a wider frequency bandwidth than 20MHz in the 3 to 6GHz or 6GHz or higher frequency bands.

Simultaneously, the mMTC is being considered to support application services such as the Internet of Things (IoT) in the 5G communication systems. To efficiently provide the IoT, the mMTC requires support for access of a large number of terminals within a cell, enhanced terminal coverage, enhanced battery life, and reduced terminal costs, etc. The IoT is attached to various sensors and devices to provide communication functions, and therefore, should be able to support a large number of terminals (e.g., 1,000,000 terminals/$km^2$) within a cell. In addition, due to the nature of services, the terminal supporting the mMTC is highly likely to be located in shadow areas, such as basements of buildings where cells may not cover. Therefore, the terminal that support mMTC may require even wider coverage than other services provided by the 5G communication systems. The terminal supporting the mMTC should be configured to be low-cost, and since it is difficult to frequently replace their batteries, a very long battery life, such as 10 to 15 years, may be required.

Finally, the URLLC refers to a cellular-based wireless communication service used for specific mission-critical purposes. For example, services and the like that employ remote control of a robots or machinery, industrial automation, an unmanned aerial vehicles (UAVs), remote health care, emergency alerts, etc. can be considered. Therefore, the communication provided by the URLLC should provide extremely low latency and extremely high reliability. For example, services supporting the URLLC should satisfy air interface latency less than 0.5 milliseconds, and at the same time, has requirements of a packet error rate (PER) of $10^{-5}$ or less. Therefore, for the services supporting the URLLC, the 5G systems should provide a shorter transmit time interval (TTI) than other services, and at the same time, may require design specifications that allocate wider resources in the frequency band to secure the reliability of communication links.

Three services of the 5G, that is, eMBB, URLLC, and mMTC, may be multiplexed and transmitted within a single system. In this case, to satisfy differing requirements of each service, different transmission and reception techniques and transmission and reception parameters may be used between services. Of course, the 5G is not limited to the three services described above.

[NR Time-Frequency Resource]

A frame structure of a 5G system will be describe in more detail below with reference to the drawings.

FIG. 1 is a diagram illustrating a basic structure of a time-frequency domain that is a radio resource domain where data or control channels are transmitted in a 5G system.

In FIG. 1, a horizontal axis represents a time domain, and a vertical axis represents a frequency domain. A basic unit of resources in the time and frequency domains is a resource element (RE) 101, which may be defined as 1 orthogonal frequency division multiplexing (OFDM) symbol 102 on a time axis and 1 subcarrier 103 on a frequency axis. In the frequency domain, $N_{SC}^{RB}$ (e.g., 12) contiguous REs may constitute one resource block (RB) 104.

FIG. 2 is a diagram illustrating a structure of a frame, a subframe, and a slot in the wireless communication system according to an embodiment of the present disclosure.

FIG. 2 illustrates an example of a structure of a frame 200, a subframe 201, and a slot 202. 1 frame 200 may be defined as 10 ms. 1 subframe 201 may be defined as 1 ms. Accordingly, 1 frame 200 may be composed of a total of 10 subframes 201. 1 slot 202 and 203 may be defined as 14 OFDM symbols (i.e., the number $N_{symb}^{slot}$ of symbols per slot = 14). 1 subframe 201 may be composed of one or more slots 202 and 203, and the number of slots 202 and 203 per subframe 201 may vary depending on configuration values μ 204 and 205 for subcarrier spacing. In an example of FIG. 2, a case where the configuration value for the subcarrier spacing is μ=0 204 and a case where the configuration value for the subcarrier spacing is μ=1 205 are illustrated. When μ=0 204, 1 subframe 201 may be composed of one slot 202, and when μ=1 205, 1 subframe 201 may be composed of two slots 203. That is, the number $N_{slot}^{subframe,\mu}$ of slots per subframe may vary depending on the configuration value μ for the subcarrier spacing, and the number $N_{slot}^{frame,\mu}$ of slots per frame may vary accordingly. The $N_{slot}^{subframe,\mu}$ and $N_{slot}^{frame,\mu}$ depending on the subcarrier spacing configurations μ may be defined as in Table 1 below.

[Table 1]

| $\mu$ | $N_{symb}^{slot}$ | $N_{slot}^{frame\mu}$ | $N_{slot}^{subframe\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N_{symb}^{slot}$ | $N_{slot}^{frame\mu}$ | $N_{slot}^{subframe\mu}$ |
|---|---|---|---|
| 4 | 14 | 160 | 16 |
| 5 | 14 | 320 | 32 |

[Bandwidth Part (BWP)]

Next, the bandwidth part (BWP) configuration in the 5G communication system will be described in detail with reference to the drawings.

FIG. 3 is a diagram illustrating an example of a bandwidth part configuration in the wireless communication system according to an embodiment of the present disclosure.

FIG. 3 illustrates an example where a UE bandwidth 300 is configured with two bandwidth parts, that is, bandwidth part #1 (BWP#1) 301 and bandwidth part #2 (BWP#2) 302. A base station may configure one or more bandwidth parts for the UE, and may configure pieces of information as shown in Table 2 below for each bandwidth part.

[Table 2]

```
BWP ::=                    SEQUENCE {
    bwp-Id                         BWP-Id,
    (BWP Identity)
    locationAndBandwidth           INTEGER (1..65536),
    (BWP location)
    subcarrierSpacing              ENUMERATED {n0, n1, n2, n3, n4, n5},
    (Sucarrier spacing)
    cyclicPrefix              ENUMERATED { extended }
    (Cyclic prefix)
}
```

Of course, the above examples are not limited, and in addition to the above configuration information, various parameters related to the bandwidth part may be configured for the UE. The above information may be transferred from the base station to the UE through higher layer signaling, such as radio resource control (RRC) signaling. At least one of one or more configured bandwidth parts may be activated. Whether the configured bandwidth part is activated may be semi-statically transferred from the base station to the UE via the RRC signaling or dynamically transferred via downlink control information (DCI).

According to some embodiments, a UE before radio resource control (RRC) connected may be configured with an initial bandwidth part (Initial BWP) for initial access via a master information block (MIB) from the base station. More specifically, during the initial access phase, the UE may receive configuration information about a control area (control resource set (CORESET)) and a search space where PDCCH for receiving system information (which may correspond to remaining system information (RMSI) or system information block 1 (SIB1)) required for the initial access may be transmitted via the MIB. The control resource set and search space configured by the MIB may each be regarded as identity (ID) 0. The base station may notify the UE of configuration information such as frequency allocation information, time allocation information, and numerology for control resource set#0 via the MIB. In addition, the base station may notify the UE of configuration information about monitoring periodicity and occasion for the control resource set#0, i.e., configuration information for search space#0, via the MIB. The UE may regard the frequency domain configured as the control resource set#0 acquired from the MIB as the initial bandwidth part for the initial access. In this case, the identity (ID) of the initial bandwidth part may be regarded as 0.

The configuration of the bandwidth part supported by the 5G may be used for various purposes.

According to some embodiments, when the bandwidth supported by the UE is smaller than the system bandwidth, this may be supported through the bandwidth part configuration. For example, by configuring, by the base station, the frequency location (configuration information 2) of the bandwidth part for the UE, the UE may transmit and receive data at a specific frequency location within the system bandwidth.

In addition, according to some embodiments, the base station may configure multiple bandwidth parts for the UE to support different numerologies. For example, to support data transmission and reception using both 15 kHz subcarrier spacing and 30 kHz subcarrier spacing for a certain UE, two bandwidth parts may be configured with 15 kHz and 30 kHz subcarrier spacing, respectively. Different bandwidth parts may be frequency-division multiplexed, and when data is to be transmitted and received in specific subcarrier spacing, the bandwidth part configured for the corresponding subcarrier spacing may be activated.

Furthermore, according to some embodiments, the base station may configure bandwidth parts with different bandwidth sizes for a UE to reduce power consumption of a UE. For example, when the UE supports a very large bandwidth, for example, 100 MHz bandwidth, and always transmits and receives data in the corresponding bandwidth, very large power consumption may occur. In particular, performing monitoring of unnecessary downlink control channels in a large bandwidth of 100 MHz in a situation where there is no traffic may be very inefficient in terms of power consumption. To reduce the power consumption of the UE, the base station may configure a bandwidth part with a relatively small bandwidth, for example, 20 MHz bandwidth part, for a UE. In the situation where there is no traffic, the UE may perform the monitoring operation in the 20 MHz bandwidth part, and when data is generated, the UE may transmit and receive data in the 100 MHz bandwidth part according to the instructions of the base station.

In the method for configuring a bandwidth part, UEs before RRC connected may receive configuration information for the initial bandwidth part through the master information block (MIB) during the initial access phase. More specifically, the UE may be configured with a control resource set (CORESET) for a downlink control channel on which downlink control information (DCI) for scheduling a system information block (SIB) may be transmitted from a MIB of a physical broadcast channel (PBCH). The bandwidth of the control resource set configured by the MIB may be regarded as the initial bandwidth part, and the UE may receive a physical downlink shared channel (PDSCH) on which the SIB is transmitted via the configured initial bandwidth part. In addition to the purpose of receiving the SIB, the initial bandwidth part may also be utilized for other system information (OSI), paging, and random access.

[Bandwidth Part (BWP) Change]

When a UE is configured with one or more bandwidth parts, the base station may instruct the UE to change (or switch and transition) the bandwidth part using a bandwidth part indicator field in the DCI. For example, in FIG. 3, when the currently activated bandwidth part of the UE is bandwidth part #1 301, the base station may instruct the UE to use bandwidth part #2 302 by the bandwidth part indicator within the DCI, and the UE may perform the bandwidth part change to the bandwidth part #2 302 indicated by the bandwidth part indicator within the received DCI.

As described above, since the DCI-based bandwidth part change may be indicated by the DCI scheduling the PDSCH or PUSCH, when the UE receives a bandwidth part change request, the UE should be able to seamlessly receive or transmit the PDSCH or PUSCH scheduled by the corresponding DCI in the changed bandwidth part. To this end, requirements for a delay time $T_{BWP}$ required when changing the bandwidth part are regulated in the standard, which may be defined as in Table 3, for example.

[Table 3]

| $\mu$ | **NR Slot length (ms)** | **BWP switch delay $T_{BWP}$ (slots)** | |
|---|---|---|---|
| | | **Type 1**[Note 1] | **Type 2**[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability.<br>Note 2: If the BWP switch involveschanging of SCS,the BWP switch delay is determined by the larger one between the SCS before BWP switch and the SCS after BWP switch. | | | |

The requirements for the bandwidth part change delay time support Type 1 or Type 2, depending on UE capability. The UE may report the supportable bandwidth part delay time type to the base station.

According to the requirements for the above-described bandwidth part change delay time, when the UE receives DCI including a bandwidth part change indicator in slot n, the UE may complete the change to the new bandwidth part indicated by the bandwidth part change indicator at a time point no later than slot n + $T_{BWP}$ and perform transmission and reception of a data channel scheduled by the corresponding DCI in the changed new bandwidth part. When scheduling the data channel with the new bandwidth part, the base station may determine the time domain resource assignment for the data channel in consideration of the bandwidth part change delay time $T_{BWP}$ of the UE. That is, when scheduling the data channel with the new bandwidth part, the base station may schedule the corresponding data channel after the bandwidth part change delay time in the method for determining time domain resource assignment for a data channel. Accordingly, the UE may not expect that the DCI indicating the bandwidth part change indicates a slot offset (K0 or K2) value smaller than the bandwidth part change delay time $T_{BWP}$.

If the UE receives the DCI (e.g., DCI format 1_1 or 0_1) indicating the bandwidth part change, the UE may not perform any transmission or reception during a time period from a third symbol of a slot in which the PDCCH including the corresponding DCI is received to a start point of a slot indicated by the slot offset (K0 or K2) value indicated by a time domain resource assignment indicator field within the corresponding DCI. For example, when the UE receives the DCI indicating the bandwidth part change in slot n and the slot offset value indicated by the corresponding DCI is K, the UE may not perform any transmission or reception from the third symbol of slot n to a symbol (i.e., the last symbol of slot n+K-1) before slot n+K.

[SS/PBCH Block]

Next, a synchronization signal (SS)/PBCH block in 5G will be described.

The SS/PBCH block may refer to a physical layer channel block composed of a primary SS (PSS), a secondary SS (SSS), and a PBCH. Specifically, the SS/PBCH block is as follows.

- PSS: It is a signal that serves as a reference for downlink time/frequency synchronization and provides partial information of cell ID.
- SSS: It is a signal that serves as a reference for downlink time/frequency synchronization and provides the remaining cell ID information not provided by the PSS. Additionally, it may serve as a reference signal for PBCH demodulation.
- PBCH: It provides essential system information required for a UE to transmit and receive a data channel and a control channel. The essential system information may include search space-related control information indicating radio resource mapping information for the control channel, scheduling control information for a separate data channel that transmits the system information, etc.
- SS/PBCH Block: It is composed of a combination of the PSS, SSS, and PBCH. One or more SS/PBCH blocks may be transmitted within a 5ms time, and each SS/PBCH block transmitted may be distinguished by an index.

The UE may detect the PSS and SSS during the initial access phase and decode the PBCH. The UE may acquire the MIB from the PBCH, and from this, may receive configuration of the control resource set (CORESET) #0 (which may correspond to the control resource set with a control resource set index of 0). The UE may monitor control resource set #0 under the assumption that the selected SS/PBCH block and a demodulation reference signal (DMRS) transmitted in control resource set #0 are quasi co located (QCL). The UE may receive the system information using the downlink control information transmitted in the control resource set #0. The UE may acquire random access channel (RACH)-related configuration information required for initial access from the received system information. The UE may transmit a physical RACH (PRACH) to the base station in consideration of the selected SS/PBCH index, and the base station receiving the PRACH may acquire information about the SS/PBCH block index selected by the UE. The base station may know which SS/PBCH block the UE has selected and that the UE monitors the control resource set #0 associated with the selected SS/PBCH block.

[PDCCH: DCI Association]

Next, the downlink control information (DCI) in the 5G system will be described in detail below.

In the 5G system, scheduling information for uplink data (or physical uplink shared channel (PUSCH)) or downlink data (or physical downlink shared channel (PDSCH)) is transferred from the base station to the UE via the DCI. The UE may monitor fallback and non-fallback DCI formats on the PUSCH or PDSCH. The fallback DCI format may be composed of fixed fields predefined between the base station and the UE, and the non-fallback DCI format may include a configurable field.

The DCI may be transmitted via a physical downlink control channel (PDCCH) after being subjected to a channel coding and modulation process. A cyclic redundancy check (CRC) is attached to a DCI message payload, and the CRC may be scrambled by a radio network temporary identifier (RNTI) that corresponds to a UE's identity. Different RNTIs may be used depending on the purpose of the DCI message, such as UE-specific data transmission, power control commands, or random access responses. In other words, the RNTI is not explicitly transmitted, but is included in a CRC calculation process and transmitted. When receiving the DCI message transmitted via the PDCCH, the UE confirms the CRC using the assigned RNTI. When the CRC confirmation result is correct, the UE may know that the corresponding message has been transmitted to the UE.

For example, the DCI scheduling the PDSCH for system information (SI) can be scrambled by SI-RNTI. The DCI scheduling PDSCH for a random access response (RAR) message may be scrambled by RA-RNTI. The DCI scheduling PDSCH for a paging message may be scrambled by P-RNTI. The DCI notifying a slot format indicator (SFI) may be scrambled by SFI-RNTI. The DCI notifying transmit power control (TPC) may be scrambled by TPC-RNTI. The DCI scheduling the UE-specific PDSCH or PUSCH may be scrambled by cell RNTI (C-RNTI).

DCI format 0_0 may be used as fallback DCI for scheduling the PUSCH. In this case, the CRC may be scrambled by the C-RNTI. DCI format 0_0 with the CRC scrambled by the C-RNTI may include, for example, pieces of information in Table 4.

[Table 4]

| |
|---|
| - Identifier for DCI formats - [1] bit |
| - Frequency domain resource assignment- $[\lceil log_2(N_{RB}^{UL,BWP}(N_{RB}^{UL,BWP}+1)/2)\rceil\ ]$ bits |
| - Time domain resource assignment - X bits |
| - Frequency hopping flag- 1 bit. |
| - Modulation and coding scheme - 5 bits |
| - New data indicator- 1 bit |
| - Redundancy version- 2 bits |
| - HARQ process number - 4 bits |
| - TPC command for scheduled PUSCH- [2] bits |
| - UL/SUL indicator - 0 or 1 bit |

DCI format 0_1 may be used as the non-fallback DCI for scheduling the PUSCH. In this case, the CRC may be scrambled by the C-RNTI. The DCI format 0_1 with the CRC scrambled by the C-RNTI may include, for example, pieces of information in Table 5.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| • For resource allocation type 0, $\lceil N_{RB}^{UL,BWP}/P\rceil$ bits |
| • For resource allocation type 1, $\lceil \log_2(N_{RB}^{UL,BWP}(N_{RB}^{UL,BWP}+1)/2)\rceil$ bits |
| - Time domain resource assignment -1, 2, 3, or 4 bits |
| - VRB-to-PRB mapping - 0 or 1 bit, only for resource allocation type 1. |
| • 0 bit if only resource allocation type 0 is configured; |
| • 1 bit otherwise. |
| - Frequency hopping flag - 0 or 1 bit, only for resource allocation type 1. |
| • 0 bit if only resource allocation type 0 is configured; |
| • 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |

(continued)

| |
|---|
| • 1 bit for semi-static HARQ-ACK codebook;<br>• 2 bits for dynamic HARQ-ACK codebook with single HARQ-ACK codebook.<br>- 2nd downlink assignment index - 0 or 2 bits |
| • 2 bits for dynamic HARQ-ACK codebook with two HARQ-ACK sub-codebooks;<br>• 0 bit otherwise.<br>- TPC command for scheduled PUSCH - 2 bits<br>- SRS resource indicator - $\left\lceil \log_2\left(\sum_{k=1}^{L_{\max}}\binom{N_{SRS}}{k}\right)\right\rceil$ or $\lceil \log_2(N_{SRS})\rceil$ bits<br>• $\left\lceil \log_2\left(\sum_{k=1}^{L_{\max}}\binom{N_{SRS}}{k}\right)\right\rceil$ bits for non-codebook based PUSCH transmission;<br>• $\lceil \log_2(N_{SRS})\rceil$ bits for codebook based PUSCH transmission.<br>- Precoding information and number of layers-up to 6 bits<br>- Antenna ports- up to 5 bits<br>- SRS request- 2 bits<br>- CSI request- 0, 1, 2, 3, 4, 5, or 6 bits<br>- CBG transmission information- 0, 2, 4, 6, or 8 bits<br>- PTRS-DMRS association - 0 or 2 bits.<br>- beta_offset indicator - 0 or 2 bits<br>- DMRS sequence initialization - 0 or 1 bit |

DCI format 1_0 may be used as the fallback DCI for scheduling the PDSCH. In this case, the CRC may be scrambled by the C-RNTI. The DCI format 1_0 with the CRC scrambled by the C-RNTI may include, for example, pieces of information in Table 6.

[Table 6]

| |
|---|
| - Identifier for DCI formats – [1] bit |
| - Frequency domain resource assignment –[$\lceil \log_2(N_{RB}^{DL,BWP}(N_{RB}^{DL,BWP}+1)/2)\rceil$ ] bits |
| - Time domain resource assignment – X bits |
| - VRB-to-PRB mapping – 1 bit. |
| - Modulation and coding scheme – 5 bits |
| - New data indicator – 1 bit |
| - Redundancy version – 2 bits |
| - HARQ process number – 4 bits |
| - Downlink assignment index – 2 bits |
| - TPC command for scheduled PUCCH – [2] bits |
| - PUCCH resource indicator – 3 bits |
| - PDSCH-to-HARQ feedback timing indicator– [3] bits |

DCI format 1_1 may be used as the non-fallback DCI for scheduling the PDSCH. In this case, the CRC may be scrambled by the C-RNTI. The DCI format 1_1 with the CRC scrambled by the C-RNTI may include, for example, pieces of information in Table 7.

[Table 7]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
| • For resource allocation type 0, $\lceil N_{RB}^{DL,BWP}/P \rceil$ bits |
| • For resource allocation type 1, $\lceil \log_2(N_{RB}^{DL,BWP}(N_{RB}^{DL,BWP}+1)/2) \rceil$ bits |
| - Time domain resource assignment -1, 2, 3, or 4 bits |
| - VRB-to-PRB mapping - 0 or 1 bit, only for resource allocation type 1. |
| • 0 bit if only resource allocation type 0 is configured; |
| • 1 bit otherwise. |
| - PRB bundling size indicator - 0 or 1 bit |
| - Rate matching indicator - 0, 1, or 2 bits |
| - ZP CSI-RS trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication- 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

[PDCCH: CORESET, REG, CCE, Search Space]

The downlink control channel in a 5G communication system will be described in more detail below with reference to the drawings.

FIG. 4 is a diagram illustrating an example of the control resource set (CORESET) in which the downlink control channel is transmitted in the 5G wireless communication system. FIG. 4 illustrates an example in which two control resource sets (control resource set #1 401 and control resource set #2 402) are configured within a UE bandwidth part 410 on a frequency axis and within one slot 420 on a time axis. The control resource sets 401 and 402 may be configured within specific frequency resources 403 within the entire UE bandwidth part 410 on the frequency axis. The control resource sets 401 and 402 may be configured as one or more OFDM symbols on the time axis, which may be defined as a control resource set duration (length) 404. Referring to the example illustrated in FIG. 4, the control resource set #1 401 is configured to a control resource set duration of 2 symbols, and the control resource set #2 402 is configured to a control resource set duration of 1 symbol.

In the above-described 5G, the control resource set may be configured for the UE by the base station through the higher layer signaling (e.g., the system information, the master information block (MIB), the radio resource control (RRC) signaling). Configuring the control resource set for the UE refers to providing information such as a control resource set identity, a frequency location of the control resource set, and symbol duration of the control resource set. For example, the control resource set may include pieces of information in Table 8.

[Table 8]

```
ControlResourceSet ::=                    SEQUENCE {
   -- Corresponds to L1 parameter 'CORESET-ID'

   controlResourceSetId                   ControlResourceSetId,
   (control resource set identity)
   frequencyDomainResources               BIT STRING (SIZE (45)),
   (frequency axis resource assignment information)
   duration                               INTEGER (1..maxCoReSetDuration),
   (time axis resource assignment information)
   cce-REG-MappingType                            CHOICE {
   (CCE to REG mapping scheme)
     interleaved                              SEQUENCE {

       reg-BundleSize                         ENUMERATED {n2, n3, n6},
       (REG bundle size)

       precoderGranularity                    ENUMERATED {sameAsREG-bundle, allContiguousRBs},

       interleaverSize                        ENUMERATED {n2, n3, n6}
       (interleaver size)

       shiftIndex                             INTEGER(0..maxNrofPhysicalResourceBlocks-1)
                          OPTIONAL
       (interleaver shift)
      },
```

```
  nonInterleaved                              NULL
 },
 tci-StatesPDCCH                        SEQUENCE(SIZE (1..maxNrofTCI-StatesPDCCH)) OF TCI-
   StateId                     OPTIONAL,
 (QCL configuration information)
 tci-PresentInDCI                       ENUMERATED {enabled}
                 OPTIONAL, -- Need S
}
```

In Table 8, tci-States PDCCH (simply referred to as transmission configuration indication (TCI) state) configuration information may include information about one or more synchronization signal (SS)/physical broadcast channel (PBCH) block index or channel state information reference signal (CSI-RS) index that are in a quasi co located (OCLed) relation with the DMRS transmitted in the corresponding control resource set.

FIG. 5 is a diagram illustrating an example of a basic unit of time and frequency resources constituting the downlink control channel that may be used in the 5G. Referring to FIG. 5, the basic unit of the time and frequency resources constituting the control channel may be referred to as a resource element group (REG) 503, and the REG 503 may be defined as 1 OFDM symbol 501 on the time axis and 1 physical resource block (PRB) 502 on the frequency axis, i.e., 12 subcarriers. The base station may constitute a downlink control channel allocation unit by concatenating the REG 503.

As illustrated in FIG. 5, when the basic unit for assigning the downlink control channel in the 5G is a control channel element (CCE) 504, 1 CCE 504 may be composed of multiple REGs 503. Describing the REG 503 illustrated in FIG. 5 as an example, the REG 503 may be composed of 12 REs. When 1 CCE 504 is composed of 6 REGs 503, 1 CCE 504 may be composed of 72 REs. When a downlink control resource set is configured, the corresponding area may be composed of multiple CCEs 504, and a specific downlink control channel may be mapped to one or more CCEs 504 depending on an aggregation level (AL) within the control resource set and transmitted. The CCEs 504 within the control resource set are distinguished by numbers. In this case, the numbers of the CCEs 504 may be assigned according to a logical mapping scheme.

The basic unit of the downlink control channel illustrated in FIG. 5, i.e., the REG 503 may include both REs to which the DCI is mapped and areas to which the DMRSs 505, which are reference signals for decoding the REs, are mapped. As illustrated in FIG. 5, 3 DMRSs 505 within 1 REG 503 may be transmitted. The number of CCEs required to transmit a the PDCCH may be 1, 2, 4, 8, or 16 depending on the aggregation level (AL), and the number of different CCEs may be used to implement link adaptation of the downlink control channel. For example, when AL=L, one downlink control channel may be transmitted via L CCEs. The UE should detect signals without knowing the information about the downlink control channel. To facilitate blind decoding, a search space representing a set of CCEs was defined. The search space is a set of downlink control channel candidates composed of the CCEs that the UE should attempt to decode at a given aggregation level. Since there are multiple aggregation levels that form a single bundle with 1, 2, 4, 8, or 16 CCEs, the UE may have multiple search spaces. A search space set may be defined as a set of search spaces at all configured aggregation levels.

The search space may be classified into a common search space and a UE-specific search space. A certain group of UEs or all UEs may search the common search space of the PDCCH to receive cell-common control information, such as dynamic scheduling or a paging message for the system information. For example, PDSCH scheduling allocation information for transmitting the SIB, which includes information such as the operator of the cell, can be received by searching the common search space of the PDCCH. The common search space may be defined as a set of pre-arranged CCEs since a certain group of UEs or all UEs should receive the PDCCH. UE-specific scheduling allocation information for the PDSCH or the PUSCH may be received by monitoring the UE-specific search space of the PDCCH. The UE-specific search space may be defined UE-specifically as a function of the UE's identity and various system parameters.

In the 5G, the parameters for the PDCCH search space may be configured for the UE by the base station through the higher layer signaling (e.g., SIB, MIB, and RRC signaling). For example, the base station may configure, for the UE, the number of PDCCH candidates at each aggregation level L, the monitoring periodicity for the search space, the monitoring occasion on a per-symbol basis within the slot for the search space, the search space type (common search space or UE-specific search space), a combination of the DCI format and RNTI to be monitored in the corresponding search space, the control resource set index for monitoring the search space, etc. For example, the search space may include pieces of information in Table 9.

[Table 9]

```
SearchSpace ::=                         SEQUENCE {
    -- Identity of the search space. SearchSpaceId = 0 identifies the SearchSpace configured via PBCH
      (MIB) or ServingCellConfigCommon.
    searchSpaceId                           SearchSpaceId,
    (search space identity)
    controlResourceSetId                    ControlResourceSetId,
    (control resource set identity)
    monitoringSlotPeriodicityAndOffset      CHOICE {
    (monitoring slot level periodicity)
      sl1                                       NULL,
      sl2                                       INTEGER (0..1),
      sl4                                       INTEGER (0..3),
      sl5                                   INTEGER (0..4),
      sl8                                       INTEGER (0..7),
      sl10                                  INTEGER (0..9),
      sl16                                  INTEGER (0..15),
      sl20                                  INTEGER (0..19)
    }
                    OPTIONAL,
    duration(monitoring duration (monitoring length))           INTEGER (2..2559)
    monitoringSymbolsWithinSlot                     BIT STRING (SIZE (14))
                            OPTIONAL,
    (monitoring symbols within slot)
    nrofCandidates                          SEQUENCE {
    (the number of PDCCH candidates at each aggregation level)
```

```
    aggregationLevel1                    ENUMERATED {n0, n1, n2, n3, n4, n5, n6, n8},
    aggregationLevel2                    ENUMERATED {n0, n1, n2, n3, n4, n5, n6, n8},
    aggregationLevel4                    ENUMERATED {n0, n1, n2, n3, n4, n5, n6, n8},
    aggregationLevel8                    ENUMERATED {n0, n1, n2, n3, n4, n5, n6, n8},
    aggregationLevel16                       ENUMERATED {n0, n1, n2, n3, n4, n5, n6, n8}
  },

  searchSpaceType                          CHOICE {
  (search space type)
    -- Configures this search space as common search space (CSS) and DCI formats to monitor.
    common                                 SEQUENCE {
   (common search space)
      }
    ue-Specific                            SEQUENCE {
   (UE-specific search space)
      -- Indicates whether the UE monitors in this USS for DCI formats 0-0 and 1-0 or for formats 0-1
    and 1-1.
      formats                              ENUMERATED {formats0-0-And-1-0, formats0-1-And-
    1-1},
      ...
    }
```

Depending on the configuration information, the base station may configure one or more search space sets for the UE. According to some embodiments, the base station may configure search space set 1 and search space set 2 for the UE, configure the UE to monitor, in the common search space, DCI format A scrambled by X-RNTI in the search space set 1, and configure the UE to monitor, in the UE-specific search space, DCI format B scrambled by Y-RNTI in the search space set 2.

Depending on the configuration information, one or more search space sets may present in the common search space or the UE-specific search space. For example, search space set #1 and search space set #2 may be configured as the common search space, and search space set #3 and search space set #4 may be configured as the UE-specific search space.

The following combinations of the DCI format and RNTI may be monitored in the common search space. Of course, the combinations are not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

The following combinations of the DCI format and RNTI may be monitored in the UE-specific search space. Of course, the combinations are not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and purposes.
Cell RNTI (C-RNTI): For UE-specific PDSCH scheduling.
Temporary Cell RNTI (TC-RNTI): For UE-specific PDSCH scheduling.
Configured Scheduling RNTI (CS-RNTI): For semi-statistically configured UE-specific PDSCH scheduling.
Random Access RNTI (RA-RNTI): For the PDSCH scheduling during the random access phase.
Paging RNTI (P-RNTI): For the PDSCH scheduling on which the paging is transmitted.
System Information RNTI (SI-RNTI): For the PDSCH scheduling on which the system information is transmitted.
Interruption RNTI (INT-RNTI): For the purpose of notifying whether puncturing is applied to the PDSCH.
Transmit Power Control for PUSCH RNTI (TPC-PUSCH-RNTI): For power control command indication on the PUSCH.
Transmit Power Control for PUCCH RNTI (TPC-PUCCH-RNTI): For power control command indication on the PUCCH.
Transmit Power Control for SRS RNTI (TPC-SRS-RNTI): For power control command indication on the SRS.
The DCI formats specified above may follow the definitions as shown in Table 10.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G, a search space at aggregation level L in control resource set p and search space set s may be expressed as shown in Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $L$: Aggregation level
- $n_{CI}$: Carrier index
- $N_{CCE,p}$: Total number of CCEs present in control resource set p
- $n_{s,f}^{\mu}$ : Slot index
- $M_{s,max}^{(L)}$ The number of PDCCH candidates at aggregation level L
- $m_{s,n_{CI}}$ = 0, ..., $M_{s,max}^{(L)}$ -1 : PDCCH candidate index at aggregation level L

- $i = 0, ..., L - 1$
-

$$Y_{p,n^{\mu}_{s,f}} = \left(A_p \cdot Y_{p,n^{\mu}_{s,f}-1}\right) mod\ D \quad , \quad Y_{p,-1} = n_{RNTI} \neq 0 \quad ,$$

$A_p = 39827$ *for pmod*3 = 0 , $A_p = 39829$ *for pmod3* = 1 $A_p = 39839$ *for pmod3* = 2 $D = 65537$
- $n_{RNTI}$ : UE's identity

$Y_{p,n^{\mu}_{s,f}}$ value may correspond to 0 for the common search space. $Y_{p,n^{\mu}_{s,f}}$ value may correspond to a value varying depending on the UE's identity (C-RNTI or ID configured for the UE by the base station) and the time index for the UE-specific search space.

In the 5G, multiple search space sets may be configured with different parameters (e.g., parameters in Table 9), so the aggregation of the search space sets monitored by the UE at each point in time may vary. For example, when the search space set #1 is configured with X-slot periodicity, the search space set #2 is configured with Y-slot periodicity, and X and Y are different, the UE may monitor both the search space set #1 and the search space set #2 in a specific slot, or monitor either the search space set #1 or the search space set #2 in a specific slot.

[Rate Matching/Puncturing Association]

Rate matching and puncturing operations will be described in detail below.

When time and frequency resource A where any symbol sequence A is to be transmitted overlaps any time and frequency resource B, the transmission and reception operations of channel A considering resource C, which corresponds to an area where resource A and resource B overlap, may involve the rate matching or puncturing operations. The specific operations may follow the following contents.

Rate Matching Operation

The base station may map and transmit channel A only to the remaining resource areas of the entire resource A for transmitting symbol sequence A to the UE, excluding the resource C corresponding to the overlapping area with the resource B. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the base station may sequentially map and transmit the symbol sequence A to {resource #1, resource #2, resource #4} which are the remaining resources of the resource A, excluding {resource #3} corresponding to the resource C. As a result, the base station may map and transmit the symbol sequence {symbol #1, symbol #2, symbol #3} to {resource #1, resource #2, resource #4}, respectively.

The UE may determine the resources A and B based on the scheduling information for the symbol sequence A from the base station, and thus, determine the resource C, which corresponds to the area where the resources A and B overlap. The UE may receive the symbol sequence A under the assumption that the symbol sequence A is mapped to the remaining areas of the entire resource A, excluding the resource C, and transmitted. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the UE may receive the symbol sequence A under the assumption that the symbol sequence A is sequentially mapped to {resource #1, resource #2, resource #4} which are the remaining resources of the resource A excluding {resource #3} corresponding to the resource C. As a result, the UE may perform a series of subsequent reception operations under the assumption that the symbol sequence {symbol #1, symbol #2, symbol #3} is mapped to {resource #1, resource #2, resource #4}, respectively, and transmitted.

Puncturing Operation

When there is the resource C corresponding to the overlapping area with the resource B in the entire resource A to which the base station intends to transmit the symbol sequence A to the UE, the base station maps the symbol sequence A to the entire resource A, but does not perform transmission in the resource area corresponding to the resource C and may perform transmission only in the remaining resource areas of the entire resource A, excluding the resource C. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the base station may map the symbol sequence A {symbol #1, symbol #2, symbol #3, symbol #4} to the resource A {resource #1, resource #2, resource #3, resource #4}, respectively, and transmit only the symbol sequence {symbol #1, symbol #2, symbol #4} corresponding to the remaining resources {resource #1, resource #2, resource #4} of the resource A, excluding {resource #3} corresponding to the resource C, and the base station may not transmit {symbol #3} mapped to {resource #3} corresponding to the resource C. As a result, the base station may map and transmit the symbol sequence {symbol #1, symbol #2, symbol #4} to {resource #1, resource #2, resource #4}, respectively.

The UE may determine the resources A and B based on the scheduling information for the symbol sequence A from the base station, and thus, determine the resource C, which corresponds to the area where the resources A and B overlap. The UE may receive the symbol sequence A under the assumption that the symbol sequence A is mapped to the entire resource A, but is transmitted only in the remaining areas of the resource area A, excluding the resource C. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the UE may assume that the symbol sequence A {symbol #1, symbol #2, symbol #3, symbol #4} is mapped to the resource A {resource #1, resource #2, resource #3, resource #4}, respectively, but does not transmit the {symbol #3} mapped to {resource 3} corresponding to the resource C, and receive the symbol sequence {symbol#1, symbol#2, symbol#4} under the assumption that the corresponding symbol sequence {symbol# 1, symbol#2, symbol#4} is mapped to the remaining resources {resource#1, resource#2, resource#4} of the resource A, excluding {resource #3} corresponding to the resource C, and transmitted. As a result, the UE may perform a series of subsequent reception operations under the assumption that the symbol sequence {symbol #1, symbol #2, symbol #4} is mapped to the {resource #1, resource #2, resource #4}, respectively, and transmitted.

Hereinafter, a method for configuring rate matching resources for the purpose of rate matching in a 5G communication system will be described. The rate matching refers to adjusting a size of a signal in consideration of the amount of resources available for transmission of the signal. For example, the rate matching of the data channel may refer to adjusting the size of the data without mapping and transmitting the data channel in a specific time and frequency resource domain.

FIG. 6 is a diagram for describing a method for a base station and a UE to transmit and receive data in consideration of a downlink data channel and rate matching resources in the wireless communication system according to an embodiment of the present disclosure.

FIG. 6 illustrates a downlink data channel (PDSCH 601) and a rate matching resource 602. The base station may configure one or more rate matching resources 602 for the UE through the higher layer signaling (e.g., RRC signaling). The rate matching resource 602 configuration information may include time axis resource assignment information 603, frequency axis resource assignment information 604, and periodicity information 605. Hereinafter, a bitmap corresponding to the frequency axis resource assignment information 604 is referred to as a "first bitmap", a bitmap corresponding to the time axis resource assignment information 603 is referred to as a "second bitmap", and a bitmap corresponding to the periodicity information 605 is referred to as a "third bitmap". When all or part of the time and frequency resources of the scheduled data channel 601 overlap the configured rate matching resources 602, the base station may rate-match the data channel 601 in the rate matching resource 602 portion and transmit the data channel 601, and the UE may receive and decode the data channel 601 after the assumption that the data channel 601 is rate-matched in the rate matching resource 602 portion.

The base station may dynamically notify the UE via the DCI whether to rate-match the data channel in the configured rate matching resource portion through additional configuration (which corresponds to a "rate matching indicator" within the above-described DCI format). Specifically, the base station may select some of the configured rate matching resources and group the selected rate matching resources into rate matching resource groups, and may use a bitmap scheme to indicate, to the UE, via the DCI, whether the data channel is rate-matched for each rate matching resource group. For example, when four rate matching resources, RMR#1, RMR#2, RMR#3, and RMR#4, are configured, the base station may configure RMG#1={RMR#1, RMR#2} and RMG#2={RMR#3, RMR#4} as the rate matching groups, and may use 2 bits within the DCI field to indicate to the UE, by the bitmap scheme, whether to perform the rate matching in the RMG#1 and RMG#2, respectively. For example, the case where the rate matching should be performed may be indicated as "1", and the case where the rate matching should not be performed may be indicated as "0".

In the 5G, granularities at "RB symbol level" and "RE level" are supported by the above-described method for configuring a rate matching resource in a UE. More specifically, it may follow the following configuration methods.

## RB Symbol Level

The UE may be configured with up to four RateMatchPatterns per bandwidth part through the higher layer signaling. A single RateMatchPattern may include the following contents.

- A reserved resource within the bandwidth part may include a resource whose time and frequency resource domains of the corresponding reserved resource are configured by a combination of a RB-level bitmap and a symbol-level bitmap on the frequency axis. The reserved resource may span across one or two slots. A repeated time domain pattern (periodicityAndPattern) composed of time and frequency domains formed by each RB-level and symbol-level bitmap pair may be additionally configured.
- The time and frequency domain resource area configured as the control resource set within the bandwidth part, and the resource area corresponding to the time domain pattern configured by the search space configuration in which the corresponding resource area is repeated may be included.

## RE Level

The UE may be configured with the following contents through the higher layer signaling.

- It may include, as configuration information (lte-CRS-ToMatchAround) for a RE corresponding to a LTE CRS (Cell-specific Reference Signal or Common Reference Signal) pattern, the number (nrofCRS-Ports) of ports of the LTE CRS, and a LTE-CRS-vshift(s) value (v-shift), location information (carrierFreqDL) of a center subcarrier of an LTE carrier from a reference frequency point (e.g., reference point A), bandwidth size (carrierBandwidthDL) information of the LTE carrier, subframe configuration information (mbsfn-SubframConfigList) corresponding to a multicast-broadcast single-frequency network (MBSFN), etc. The UE may determine a location of a CRS within an NR slot corresponding to the LTE subframe based on the above-described information.
- It may include configuration information for a resource set corresponding to one or more zero power (ZP) CSI-RSs within the bandwidth part.

[PDSCH/PUSCH: Frequency Resource Assignment Association]

FIG. 7 is a diagram illustrating an example of frequency axis resource assignment for a physical downlink shared channel (PDSCH) or a physical uplink shared channel (PUSCH) in a wireless communication system according to an embodiment of the present disclosure.

FIG. 7 is a diagram illustrating method for assigning three frequency axis resources, type-0 7-00, type-1 7-05, and dynamic switch 7-10 which are configurable through a higher layer in an NR wireless communication system.

Referring to FIG. 7, when the UE is configured to use only type-0 resource allocation via higher layer signaling 7-00, some of the downlink control information (DCI) that assigns the PDSCH/PUSCH to the corresponding UE includes a bitmap composed of $N_{RBG}$ bits. In this case, $N_{RBG}$ refers to the number of resource block groups (RBGs) determined as shown in [Table 11] below depending on a BWP size assigned by a BWP indicator and a higher layer parameter rbg-Size, and data is transmitted to the RBG indicated as 1 by the bitmap.

[Table 11]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

The BWP size is the number of RBs included in the BWP. More specifically, when the type-0 resource allocation is indicated, a length of the frequency domain resource assignment (FDRA) field in the DCI received by the UE is equal to the number $N_{RBG}$ of RBGs, which is $N_{RBG} = \left\lceil (N_{BWP}^{size} + (N_{BWP}^{start} \bmod P))/P \right\rceil$. Here, when a first RBG includes $\mathrm{RBG}_0^{\mathrm{size}} = \mathrm{P} - \mathrm{N}_{\mathrm{BWP}}^{\mathrm{size}} \bmod P$ RBs, a last RBG includes $\mathrm{RBG}_{last}^{\mathrm{size}} = \left(\mathrm{N}_{\mathrm{BWP}}^{\mathrm{start}} + \mathrm{N}_{\mathrm{BWP}}^{\mathrm{size}}\right) \bmod P$ RBs, if $\left(\mathrm{N}_{\mathrm{BWP}}^{\mathrm{start}} + \mathrm{N}_{\mathrm{BWP}}^{\mathrm{size}}\right) \bmod P > 0$ and otherwise, $\mathrm{RBG}_{last}^{\mathrm{size}} = \mathrm{P}$ RBs are included. The remaining RBGs include P RBs. Here, P is the number of nominal RBGs determined according to Table 11.

**Resource Allocation Type 2**

- RB allocation information may be notified from the base station to the UE as M interlace index sets
- The interlace index $m \in \{0,1, \ldots, M-1\}$ may be composed of common RB $\{m, M+m, 2M+m, 3M+m, \ldots\}$, and M may be defined as shown in Table 12.

[Table 12]

| $\mu$ | ***M*** |
|---|---|
| 0 | 10 |
| 1 | 5 |

The relation between $n^{\mu}_{\mathrm{IRB},m} \in \{0,1,\ldots\}$ present in the interlace m and bandwidth part i and the common RB $n^{\mu}_{\mathrm{CRB}}$ may be defined as follows.

▪

$$n^{\mu}_{\mathrm{CRB}} = M n^{\mu}_{\mathrm{IRB},m} + N^{\mathrm{start},\mu}_{\mathrm{BWP},i} + \left(\left(m - N^{\mathrm{start},\mu}_{\mathrm{BWP},i}\right) \bmod M\right)$$

▪ where $N^{\mathrm{start},\mu}_{\mathrm{BWP},i}$ is the common resource block where bandwidth part starts relative to common resource block 0.

*u* is subcairre spacing index

- When the subcarrier spacing is 15 kHz (u=0), the RB allocation information for the interlace set may be notified from the base station to the UE via the $m_0 + l$ indices. In addition, the resource assignment field may be composed of a resource indication value (RIV). When the resource indicator value is $0 \le RIV < M(M+1)/2$ and $0 \le RIV < M(M+1)/2$ , the resource indicator value may be composed of a start interlace $m_0$ and the number $L$ ( $L \ge 1$ ) of contiguous interlaces, and the value is as follows.

$$\begin{aligned}&\text{if } (L-1) \le \lfloor M/2 \rfloor \text{ then}\\ &RIV = M(L-1) + m_0\\ &\text{else}\\ &RIV = M(M-L+1) + (M-1-m_0)\end{aligned}$$

When the resource indication value is $RIV \ge M(M+1)/2$, the resource indication value may be composed of the start interlace index $m_0$ and l values, and may be configured as shown in Table 13.

[Table 13]

| ***RIV - M(M + 1)/2*** | $m_0$ | ***l*** |
|---|---|---|
| 0 | 0 | {0, 5} |
| 1 | 0 | {0, 1, 5, 6} |
| 2 | 1 | {0, 5} |

(continued)

| *RIV* - *M*(*M* + 1)/2 | $m_0$ | *l* |
|---|---|---|
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

**[0133]** - - When the subcarrier spacing is 30 kHz (u=1), the RB allocation information may be notified from the base station to the UE in the form of the bitmap indicating the interlaces allocated to the UE. The bitmap size is M, and each 1 bit in the bitmap corresponds to the interlace. The order of the interlace bitmaps may be mapped from MSB to LSB, from interlace index 0 to M-1.

In addition, for 15 kHz and 30 kHz, the least significant bit (LSB) $Y = \left\lceil log2\frac{N_{RB-set}^{BWP}(N_{RB-set}^{BWP}+1)}{2}\right\rceil$ of the FDRA field may indicate a contiguous RB set of the PUSCH scheduled by the DCI format 0_1. AY bit may be composed of a resource indication value ($RIV_{RBset}$). In $0 \leq RIV_{RBset} < N_{RB-set}^{BWP}(N_{RB-set}^{BWP}+1)/2$, $l = 0,1, \cdots L_{RBset} - 1$, , the $RIV_{RBset}$ value may be determined by a start RB set ($RBset_{\mathrm{START}}$) and the number ($L_{RBset}$ ($L_{RBset} \geq 1$)) of contiguous RB sets. The $RIV_{RBset}$ value may be defined as follows.

if $(L_{RBset} - 1) \leq \lfloor N_{RB-set}^{BWP}/2 \rfloor$ then

$$RIV_{RBset} = N_{RB-set}^{BWP}(L_{RBset} - 1) + RBset_{\mathrm{START}}$$

else

$$RIV_{RBset} = N_{RB-set}^{BWP}(N_{RB-set}^{BWP} - L_{RBset} + 1) + (N_{RB-set}^{BWP} - 1 - RBset_{\mathrm{START}})$$

$N_{RB-set}^{BWP}$ refers to the number of RB sets included in the BWP, and may be determined by the number of guard gaps (or bands) within the carrier configured by the higher signaling (or preconfigured).

When the UE is configured to use only type-1 resource allocation through the higher layer signaling (7-05), the DCI allocating the PDSCH/PUSCH to the corresponding UE includes the frequency domain resource assignment information (FDRA) composed of $\lceil \log_2(N_{RB}^{BWP} * (N_{RB}^{BWP} + 1)/2 \rceil$ bits. Here, $N_{RB}^{BWP}$ is the number of RBs included in the BWP. In this way, the base station may configure a starting VRB 7-20 and a length 7-25 of frequency axis resource contiguously allocated from the starting VRB 7-20.

When the UE is configured to use both the type-0 and type-1 resource allocation through the higher layer signaling 7-10, some DCIs allocating the PDSCH/PUSCH to the corresponding UE include the frequency axis resource assignment information composed of bits with the larger value 7-35 of a payload 7-15 for configuring the type-0 resource allocation and payloads 7-20 and 7-25 for configuring the type-1 resource allocation. The conditions for this will be described later. In this case, one bit may be added to the most significant bit (MSB) of the frequency axis resource assignment information within the DCI, and the corresponding bit with a value of '0' may indicate the use of the type-0 resource allocation, while the corresponding bit with a value of '1' may indicate the use of the type-1 resource allocation.

[PDSCH/PUSCH: Time Resource Allocation Association]

A time domain resource assignment method for a data channel in a next generation mobile communication system (5G or NR systems) will be described below.

The base station may configure, for the UE, a table for time domain resource assignment information for the downlink data channel (physical downlink shared channel (PDSCH)) and the uplink data channel (physical uplink shared channel (PUSCH)) through the higher layer signaling (e.g., the RRC signaling). For the PDSCH, a table composed of up to maxNrofDL-Allocations=16 entries may be configured, and for the PUSCH, a table composed of up to maxNrofUL-Allocations=16 entries may be configured. In an embodiment, the time domain resource assignment information may include PDCCH-to-PDSCH slot timing (corresponding to a time interval in slot units between a time point at which the PDCCH is received and a time point at which the PDSCH scheduled by the received PDCCH is transmitted, which is denoted as K0), PDCCH-to-PUSCH slot timing (corresponding to a time interval in slot units between a time point at which the PDCCH is received and a time point at which the PUSCH scheduled by the received PDCCH is transmitted, which is denoted as K2), information about a location and length of a start symbol for which the PDSCH or the PUSCH is scheduled within a slot, a mapping type of the PDSCH or the PUSCH, etc. For example, information such as [Table 14] or [Table 15] below may be transmitted from the base station to the UE.

[Table 14]

***PDSCH-TimeDomainResourceAllocationList* information element**

```
PDSCH-TimeDomainResourceAllocationList ::= SEQUENCE
(SIZE(1..maxNrofDL-Allocations)) OF PDSCH-TimeDomainResourceAllocation

PDSCH-TimeDomainResourceAllocation ::=   SEQUENCE {
    k0                                   INTEGER(0..32)
OPTIONAL,    -- Need S
    (PDCCH-to-PDSCH timing, slot units)
mappingType                              ENUMERATED {typeA, typeB},
(PDSCH mapping type)
startSymbolAndLength                     INTEGER (0..127)
(PDSCH start symbol and length)
}
```

[Table 15]

***PUSCH-TimeDomainResourceAllocation* information element**

```
PUSCH-TimeDomainResourceAllocationList ::= SEQUENCE
(SIZE(1..maxNrofUL-Allocations)) OF PUSCH-TimeDomainResourceAllocation

PUSCH-TimeDomainResourceAllocation ::=   SEQUENCE {
    k2                                   INTEGER(0..32)
OPTIONAL,    -- Need S
    (PDCCH-to-PUSCH timing, slot units)
    mappingType                          ENUMERATED {typeA, typeB},
    (PUSCH mapping type)

    startSymbolAndLength                 INTEGER (0..127)
    (PUSCH start symbol and length)
}
```

The base station may notify the UE of one of the entries in the table for the above-described time domain resource assignment information via L1 signaling (e.g., DCI) (e.g., indicated by the 'time domain resource assignment' field within the DCI). The UE may acquire the time domain resource assignment information for the PDSCH or the PUSCH based on the DCI received from the base station.

FIG. 8 is a diagram illustrating an example of time axis resource assignment for PDSCH in the wireless communication system according to an embodiment of the present disclosure.

Referring to FIG. 8, the base station may indicate a time axis location of the PDSCH resource based on the subcarrier spacing (SCS) ($\mu$PDSCH, $\mu$PDCCH) of the data channel and the control channel configured using the upper layer, a scheduling offset (K0) value, and an OFDM symbol start location 8-00 and length 8-05 within one slot dynamically indicated via the DCI.

FIG. 9 is a diagram illustrating an example of the time axis resource assignment according to the subcarrier spacing of the data channel and the control channel in the wireless communication system according to an embodiment of the present disclosure.

Referring to FIG. 9 , when the subcarrier spacing of the data channel and the subcarrier spacing of the control channel are the same (9-00, $\mu$PDSCH = $\mu$PDCCH), slot numbers for data and control are the same, so the base station and the UE may generate a scheduling offset according to a predetermined slot offset K0. On the other hand, when the subcarrier spacing of the data channel and the subcarrier spacing of the control channel are different (9-05, $\mu$PDSCH $\neq$ $\mu$PDCCH), the slot numbers for the data and control are different, so the base station and the UE may generate a scheduling offset according to the predetermined slot offset K0, based on the subcarrier spacing of the PDCCH.

[PUSCH: Transmission Scheme Association]

Next, the scheduling scheme for the PUSCH transmissions will be described. The PUSCH transmission may be dynamically scheduled based on UL grant within the DCI or may be operated based on configured grant Type 1 or Type 2. The dynamic scheduling for the PUSCH transmission may be indicated by the DCI format 0_0 or 0_1.

Configured grant Type 1 PUSCH transmission may be semi-statically configured by receiving a configuredGrantConfig including the rrc-ConfiguredUplinkGrant in [Table 16] through the higher signaling, without receiving the UL grant within the DCI. Configured grant Type 2 PUSCH transmission may be semi-persistently scheduled based on the UL grant within the DCI after receiving the configuredGrantConfig not including the rrc-ConfiguredUplinkGrant in [Table 16] through the higher signaling. When the PUSCH transmission operates by the configured grant, parameters applied to the PUSCH transmission are applied via configuredGrantConfig in [Table 16] as the higher signaling, excluding dataScramblingIdentityPUSCH, txConfig, codebookSubset, maxRank, and scaling of UCI-OnPUSCH provided by pusch-Config in [Table 17] as the higher signaling. When the UE receives transformPrecoder within configuredGrantConfig in [Table 16] as the higher signaling, the UE applies tp-pi2BPSK within the pusch-Config in [Table 17] for the PUSCH transmission operated by the configured grant.

[Table 16]

```
ConfiguredGrantConfig ::=                SEQUENCE {
    frequencyHopping                         ENUMERATED {intraSlot, interSlot}
OPTIONAL,    -- Need S,
    cg-DMRS-Configuration                    DMRS-UplinkConfig,
    mcs-Table                                ENUMERATED {qam256, qam64LowSE}
OPTIONAL,    -- Need S
    mcs-TableTransformPrecoder               ENUMERATED {qam256, qam64LowSE}
OPTIONAL,    -- Need S
    uci-OnPUSCH                              SetupRelease { CG-UCI-OnPUSCH }
OPTIONAL,    -- Need M
    resourceAllocation                       ENUMERATED { resourceAllocationType0,
resourceAllocationType1, dynamicSwitch },
    rbg-Size                                 ENUMERATED {config2}
OPTIONAL,    -- Need S
    powerControlLoopToUse                    ENUMERATED {n0, n1},
    p0-PUSCH-Alpha                           P0-PUSCH-AlphaSetId,
    transformPrecoder                        ENUMERATED {enabled, disabled}
OPTIONAL,    -- Need S
    nrofHARQ-Processes                       INTEGER(1..16),
    repK                                     ENUMERATED {n1, n2, n4, n8},
    repK-RV                                  ENUMERATED {s1-0231, s2-0303, s3-0000}
OPTIONAL,    -- Need R
    periodicity                              ENUMERATED {
                                                    sym2, sym7, sym1x14, sym2x14,
sym4x14, sym5x14, sym8x14, sym10x14, sym16x14, sym20x14,
                                                    sym32x14, sym40x14, sym64x14,
sym80x14, sym128x14, sym160x14, sym256x14, sym320x14, sym512x14,
                                                    sym640x14, sym1024x14, sym1280x14,
sym2560x14, sym5120x14,
```

```
                                                sym6, sym1x12, sym2x12, sym4x12,
sym5x12, sym8x12, sym10x12, sym16x12, sym20x12, sym32x12,
                                                sym40x12, sym64x12, sym80x12,
sym128x12, sym160x12, sym256x12, sym320x12, sym512x12, sym640x12,
                                                sym1280x12, sym2560x12
    },
    configuredGrantTimer                        INTEGER (1..64)
OPTIONAL,   -- Need R
    rrc-ConfiguredUplinkGrant                   SEQUENCE {
        timeDomainOffset                            INTEGER (0..5119),
        timeDomainAllocation                        INTEGER   (0..15),
        frequencyDomainAllocation                   BIT STRING (SIZE(18)),
        antennaPort                                 INTEGER (0..31),
        dmrs-SeqInitialization                    INTEGER (0..1)
OPTIONAL,   -- Need R
        precodingAndNumberOfLayers                  INTEGER (0..63),
        srs-ResourceIndicator                     INTEGER (0..15)
OPTIONAL,   -- Need R
        mcsAndTBS                                   INTEGER (0..31),
        frequencyHoppingOffset                      INTEGER (1..
maxNrofPhysicalResourceBlocks-1)                    OPTIONAL,   -- Need R
        pathlossReferenceIndex                      INTEGER (0..maxNrofPUSCH-
PathlossReferenceRSs-1),
        ...
    }
OPTIONAL,   -- Need R
    ...
}
```

Next, the PUSCH transmission method will be described. A DMRS antenna port for the PUSCH transmission is the same as an antenna port for SRS transmission. The PUSCH transmission may follow a codebook-based transmission method and a noncodebook-based transmission method, respectively, depending on whether a txConfig value within the pusch-Config in [Table 15] as the higher signaling is 'codebook' or 'nonCodebook'.

As described above, the PUSCH transmission may be dynamically scheduled by the DCI format 0_0 or 0_1, or semi-statically configured by the configured grant. When the UE is instructed to schedule the PUSCH transmission by the DCI format 0_0, the UE performs beam configuration for the PUSCH transmission by using pucch-spatialRelationInfoID corresponding to the UE-specific PUCCH resource corresponding to a minimum ID within the activated uplink BWP of the serving cell. In this case, the PUSCH transmission is based on the single antenna port. The UE does not expect scheduling for the PUSCH transmission by the DCI format 0_0 within a BWP where no PUCCH resource including pucch-spatialRelationInfo is configured. When the UE is not configured with the txConfig within the pusch-Config in [Table 17], the UE does not expect to be scheduled by the DCI format 0_1.

[Table 17]

```
PUSCH-Config ::=                                SEQUENCE {
    dataScramblingIdentityPUSCH                     INTEGER (0..1023)
OPTIONAL,    -- Need S
    txConfig                                        ENUMERATED {codebook, nonCodebook}
OPTIONAL,    -- Need S
    dmrs-UplinkForPUSCH-MappingTypeA                SetupRelease { DMRS-UplinkConfig }
OPTIONAL,    -- Need M
    dmrs-UplinkForPUSCH-MappingTypeB                SetupRelease { DMRS-UplinkConfig }
OPTIONAL,    -- Need M

    pusch-PowerControl                              PUSCH-PowerControl
OPTIONAL,    -- Need M
    frequencyHopping                                ENUMERATED {intraSlot, interSlot}
OPTIONAL,    -- Need S
    frequencyHoppingOffsetLists                     SEQUENCE (SIZE (1..4)) OF INTEGER (1..
maxNrofPhysicalResourceBlocks-1)

OPTIONAL,    -- Need M
    resourceAllocation                              ENUMERATED { resourceAllocationType0,
resourceAllocationType1, dynamicSwitch},
    pusch-TimeDomainAllocationList                  SetupRelease { PUSCH-
TimeDomainResourceAllocationList }                  OPTIONAL,    -- Need M
    pusch-AggregationFactor                         ENUMERATED { n2, n4, n8 }
OPTIONAL,    -- Need S
    mcs-Table                                       ENUMERATED {qam256, qam64LowSE}
OPTIONAL,    -- Need S
    mcs-TableTransformPrecoder                      ENUMERATED {qam256, qam64LowSE}
OPTIONAL,    -- Need S
    transformPrecoder                               ENUMERATED {enabled, disabled}
```

```
OPTIONAL,     -- Need S
    codebookSubset                          ENUMERATED
{fullyAndPartialAndNonCoherent, partialAndNonCoherent,nonCoherent}

OPTIONAL, -- Cond codebookBased
    maxRank                                 INTEGER (1..4)
OPTIONAL, -- Cond codebookBased
    rbg-Size                               ENUMERATED { config2}
OPTIONAL, -- Need S
    uci-OnPUSCH                             SetupRelease { UCI-OnPUSCH}
OPTIONAL, -- Need M
    tp-pi2BPSK                             ENUMERATED {enabled}
OPTIONAL, -- Need S
    ...
}
```

Next, the codebook-based PUSCH transmission will be described. The codebook-based PUSCH transmission may be dynamically scheduled by the DCI format 0_0 or 0_1, or semi-statically operated by the configured grant. When the codebook-based PUSCH is dynamically scheduled by the DCI format 0_1 or semi-statically configured by the configured grant, the UE determines a precoder for the PUSCH transmission based on an SRS resource indicator (SRI), a transmission precoding matrix indicator (TPMI), and a transmission rank (the number of PUSCH transmission layers).

In this case, the SRI may be provided via the SRS resource indicator as the field within the DCI or configured via srs-ResourceIndicator as the higher signaling. The UE is configured with at least one SRS resource for the codebook-based PUSCH transmission, but may be configured with up to two SRS resources. When the UE receives the SRI via the DCI, the SRS resource indicated by the corresponding SRI refers to the SRS resource corresponding to the SRI among the SRS resources transmitted prior to the PDCCH including the corresponding SRI. In addition, the TPMI and the transmission rank may be provided via precoding information and number of layers as the field within the DCI, or configured via precodingAndNumberOfLayers as the higher signaling. The TPMI is used to indicate the precoder applied to the PUSCH transmission. When the UE is configured with one SRS resource, the TPMI is used to indicate a precoder to be applied to one configured SRS resource. When the UE is configured with multiple SRS resources, the TPMI is used to indicate the precoder to be applied to the SRS resource indicated via the SRI.

The precoder to be used for the PUSCH transmission is selected from an uplink codebook with the number of antenna ports equal to a nrofSRS-Ports value within the SRS-Config as the higher signaling. In the codebook-based PUSCH transmission, the UE determines the codebook subset based on the TPMI and a codebookSubset within the pusch-Config as the higher signaling. The codebookSubset within the pusch-Config as the higher signaling may be configured with one of 'fullyAndPartialAndNonCoherent', 'partialAndNonCoherent', or 'nonCoherent' based on the UE capability reported by the UE to the base station. When the UE reports 'partialAndNonCoherent' in the UE capability, the UE does not expect the codebookSubset value as the higher signaling to be configured to 'fullyAndPartialAndNonCoherent'. In addition, when the UE reports 'nonCoherent' in the UE capability, the UE does not expect the codebookSubset value as the higher signaling to be configured to 'fullyAndPartialAndNonCoherent' or 'partialAndNonCoherent'. When nrofSRS-Ports within the SRS-ResourceSet as the higher signaling indicates two SRS antenna ports, the UE does not expect the codebookSubset value as the higher signaling to be configured to 'partialAndNonCoherent'.

The UE may receive one SRS resource set where a usage value within the SRS-ResourceSet as the higher signaling is configured to 'codebook', and may be indicated one SRS resource within the corresponding SRS resource set through the SRI. When multiple SRS resources are configured within the SRS resource set where the usage value within the SRS-ResourceSet as the higher signaling is configured to the 'codebook', the UE expects the nrofSRS-Ports value within the SRS-Resource as the higher signaling to be configured to the same value for all the SRS resources.

The UE transmits, to the base station, one or multiple SRS resources included in the SRS resource set where the usage value is configured to the 'codebook' according to the higher signaling, and the base station selects one of the SRS resources transmitted by the UE and instructs the UE to perform the PUSCH transmission using the transmission beam information of the selected SRS resource. In this case, in the codebook-based PUSCH transmission, the SRI is used as information to select an index of one SRS resource and is included in the DCI. Additionally, the base station includes, in the DCI, information indicating the TPMI and rank to be used by the UE for the PUSCH transmission. The UE performs the PUSCH transmission using the SRS resource indicated by the SRI by applying the indicated rank based on the transmission beam of the corresponding SRS resource and the precoder indicated by the TPMI.

Next, the noncodebook-based PUSCH transmission will be described. The noncodebook-based PUSCH transmission may be dynamically scheduled by the DCI format 0_0 or 0_1, or semi-statically operated by the configured grant. When at least one SRS resource is configured in the SRS resource set where the usage value within the SRS-ResourceSet as the higher signaling is configured to 'nonCodebook', the UE may receive scheduling of the noncodebook-based PUSCH transmission via the DCI format 0_1.

For the SRS resource set where the usage value within the SRS-Resource Set as the higher signaling is configured to 'nonCodebook', the UE may be configured with one connected non-zero power CSI-RS (NZP CSI-RS). The UE may perform calculations on a precoder for SRS transmission by measuring the NZP CSI-RS resource connected to the SRS resource set. When a difference between a last received symbol of an aperiodic NZP CSI-RS resource connected to the SRS resource set and a first symbol of aperiodic SRS transmission at the UE is less than 42 symbols, the UE does not expect information about the precoder for the SRS transmission to be updated.

When a resourceType value within the SRS-ResourceSet as the higher signaling is configured to 'aperiodic', the connected NZP CSI-RS is indicated by an SRS request as a field within DCI format 0_1 or 1_1. In this case, when the connected NZP CSI-RS resource is an aperiodic NZP CSI-RS resource, the presence of the connected NZP CSI-RS is indicated in the case where the value of the SRS request as the field within the DCI format 0_1 or 1_1 is not '00'. In this case, the corresponding DCI should not indicate cross carrier or cross BWP scheduling. In addition, when the value of the SRS request indicates the presence of the NZP CSI-RS, the corresponding NZP CSI-RS is located in the slot where the PDCCH including the SRS request field is transmitted. In this case, TCI states configured on the scheduled subcarrier are not configured to QCL-TypeD.

When a periodic or semi-persistent SRS resource set is configured, the connected NZP CSI-RS may be indicated via the associatedCSI-RS in the SRS-ResourceSet as the higher signaling. For the noncodebook-based transmission, the UE does not expect spatialRelationInfo as the higher signaling for the SRS resource and the associatedCSI-RS within the SRS-ResourceSet as the higher signaling to be configured together.

When the UE is configured with multiple SRS resources, the UE may determine the precoder and transmission rank to be applied to the PUSCH transmission based on the SRI indicated by the base station. The SRI may be indicated via the SRS resource indicator as the field within the DCI or configured via srs-ResourceIndicator as the higher signaling. Similar to the codebook-based PUSCH transmission described above, when the UE receives the SRI via the DCI, the SRS resource indicated by the corresponding SRI refers to the SRS resource corresponding to the SRI among the SRS resources transmitted prior to the PDCCH including the corresponding SRI. The UE may use one or more SRS resources for the SRS transmission. The maximum number of SRS resources that can be simultaneously transmitted within the same symbol within one SRS resource set and the maximum number of SRS resources are determined by the UE capability reported by the UE to the base station. In this case, the simultaneously transmitted SRS resources occupy the same RB. The UE configures one SRS port for each SRS resource. The number of SRS resource sets where the usage value within the SRS-ResourceSet as the higher signaling is configured to the 'nonCodebook' may be configured to only one, and the number of SRS resources for noncodebook-based PUSCH transmission may be configured to up to four.

The base station transmits one NZP-CSI-RS connected to the SRS resource set to the UE, and the UE calculates a precoder to be used when transmitting one or more SRS resources within the corresponding SRS resource set based on the results measured when receiving the corresponding NZP-CSI-RS. When the UE transmits one or more SRS resources within the SRS resource set where the usage is configured to the 'nonCodebook' to the base station, the UE applies the calculated precoder, and the base station selects one or more SRS resources from among the received one or more SRS resources. In this case, in the noncodebook-based PUSCH transmission, the SRI represents an index that may represent a combination of one or more SRS resources, and the SRI is included in the DCI. In this case, the number of SRS resources indicated by the SRI transmitted by the base station may be the number of PUSCH transmission layers, and the UE transmits the PUSCH by applying the precoder applied to the SRS resource transmission to each layer.

[CA/ DC Association]

FIG. 10 is a diagram illustrating a wireless protocol structure between a base station and a UE in a single cell, carrier aggregation, and dual connectivity situation according to an embodiment of the present disclosure.

Referring to FIG. 10, the wireless protocol of the next generation mobile communication system consist of NR service data adaptation protocol (NR SDAP) (S25, S70), NR packet data convergence protocol (NR PDCP) (S30, S65), NR radio link control (NR RLC) (S35, S60), and NR medium access control (NR MAC) (S40, S55) at the UE and NR base station, respectively.

The main functions of NR SDAP (S25, S70) may include some of the following functions.

- Transfer function of user data (Transfer of user plane data)
- Mapping function of QoS flow and data bearer with respect to uplink and downlink (Mapping between a QoS flow and a DRB for both DL and UL)
- Marking function of QoS flow ID with respect to uplink and downlink (Marking of QoS flow ID in both DL and UL packets)
- Function of mapping reflective QoS flow to data bearer with respect to uplink SDAP PDUs (Reflective QoS flow to DRB mapping for the UL SDAP PDUs).

For the SDAP layer entity, the UE may be configured to determine, via an RRC message, whether to use a header of the SDAP layer entity or a function of the SDAP layer entity on a per-PDCP layer entity basis, a per-bearer basis, or per-logical channel basis. When the SDAP header is configured, the UE may instruct a 1-bit indicator for NAS reflective QoS and a 1-bit indicator for AS reflective QoS of the SDAP header to update or reconfigure the mapping information for the QoS flow and data bearer in the uplink and downlink. The SDAP header may include QoS flow ID information representing QoS. The QoS information may be used as data processing priority, scheduling information, etc., to support smooth service.

The main functions of NR PDCP (S30, S65) may include some of the following functions.

- Header compression and decompression function (Header compression and decompression: ROHC only)
- User data transfer function (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Coding and decoding function (Ciphering and deciphering)
- Timer based SDU discard function (Timer-based SDU discard in uplink.)

The reordering function of the NR PDCP entity refers to a function of reordering PDCP PDUs received from a lower layer in sequence based on a PDCP sequence number (SN) and may include a function of delivering data to the higher layer in the reordered order. Alternatively, the reordering function of the NR PDCP entity may include a function of directly delivering PDCP PDUs without considering order, a function of recording lost PDCP PDUs by reordering, a function of reporting a status of lost PDCP PDUs to a transmitting side, and a function of requesting retransmission of lost PDCP PDUs.

The main functions of the NR RLC (S35, S60) may include some of the following functions.

- Data transfer function (Transfer of upper layer PDUs)
- In-sequence delivery function (In-sequence delivery of upper layer PDUs)
- Out-of-sequence delivery function (Out-of-sequence delivery of upper layer PDUs)
- ARQ function (Error Correction through ARQ)
- Concatenation, segmentation, reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

The in-sequence delivery function of the NR RLC entity refers to the function of sequentially delivering RLC SDUs received from the lower layer to the higher layer. The in-sequence delivery function of the NR RLC entity may include a function of, when an original one RLC SDU is received after being segmented into multiple RLC SDUs, reassembling and delivering the RLC SDUs, a function of reordering the received RLC PDUs based on the RLC sequence number (SN) or the PDCP sequence number (SN), a function of recording lost RLC PDUs by reordering the RLC PDUs, a function of reporting a status of lost RLC PDUs to a transmitting side, and a function of requesting retransmission of the lost RLC PDUs. The in-sequence delivery function of the NR RLC entity may include a function of delivering, to the higher layer in sequence only the RLC SDUs before the lost RLC SDU when there is the lost RLC SDU, or a function of delivering, to the higher layer, in sequence all RLC SDUs received before a timer starts when a predetermined timer has expired even when there are the lost RLC SDUs. Alternatively, the in-sequence delivery function of the NR RLC entity may include a function of delivering in sequence all RLC SDUs received so far to the higher layer when the predetermined timer has expired even when there are the lost RLC SDUs. In addition, the RLC PDUs may be processed in the sequence they are received (in the sequence of arrival, regardless of the sequence of the sequence number) and delivered to the PDCP entity out-of sequence delivery. In the case of the segment, the segments stored in the buffer or to be received later may be received, reconstructed into a single complete RLC PDU, processed, and then delivered to the PDCP entity. The NR RLC layer may not include a concatenation function, and the function may be performed in the NR MAC layer or replaced with a multiplexing function of the NR MAC layer.

The out-of-sequence delivery function of the NR RLC entity described above refers to the function of directly delivering the RLC SDUs received from the lower layer to the higher layer out-of-sequence. When the original one RLC SDU is segmented into multiple RLC SDUs and received, the out-of-sequence delivery function may include a function of reassembling and delivering multiple RLC SDUs, and include a function of storing the RLC SNs or PDCP SNs of the received RLC PDUs, ordering the RLC SNs or PDCP SNs, and recording the lost RLC PDUs.

The NR MAC (S40, S55) may be connected to multiple NR RLC layer entities configured in one UE, and the main functions of the NR MAC may include some of the following functions.

- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Function for priority adjustment between logical channels (Priority handling between logical channels of one UE)
- Function for priority adjustment between UEs (Priority handling between UEs by means of dynamic scheduling)
- MBMS service identify function (MBMS service identification)
- Transport format selection function (Transport format selection)
- Padding function (Padding)

The NR PHY layer (S45, S50) may perform operations such as channel coding and modulating higher layer data, converting the higher layer data into OFDM symbols to transmit via a wireless channel, or demodulating and channel decoding the OFDM symbols received via the wireless channel and delivering the OFDM symbols to the higher layer.

The detailed structure of the wireless protocol structure may vary depending on a carrier (or cell) operation scheme. For example, when the base station transmits data to the UE based on a single carrier (or cell), the base station and the UE use a protocol structure having a single structure for each layer, as in S00. On the other hand, when the base station transmits data to the UE based on carrier aggregation (CA) using multiple carriers in a single transmission and reception point (TRP), the base station and the UE use a protocol structure that has a single structure up to the RLC, as in S10, but multiplexes a PHY layer through a MAC layer. As another example, when the base station transmits data to the UE based on dual connectivity (DC) using multiple carriers in multiple TRPs, the base station and the UE use the protocol structure that has the single structure up to the RLC but multiplexes the PHY layer through the MAC layer, as in S20.

Referring to the descriptions related to the PDCCH and beam configuration described above, the repeated transmission of the PDCCH is not currently supported in the Rel-15 and Rel-16 NR, and thus, it is difficult to achieve the required reliability in scenarios requiring high reliability, such as URLLC. The present disclosure may provide a method for repeatedly transmitting PDCCH through multiple transmission points (TRPs). According to the present disclosure, the PDCCH reception reliability of the UE may be improved. A specific method will be described in detail in the following embodiments.

Hereinafter, embodiments of the present disclosure will be described in detail with reference to the accompanying drawings. An embodiment of the present disclosure may be applied to, for example, systems such as frequency division duplex (FDD), time division duplex (TDD), and cross division duplex (XDD), but is not limited thereto. Hereinafter, in the present disclosure, the higher signaling (or higher layer signaling) may be a signal transmission method or a signal that is transmitted from the base station to the UE using a downlink data channel of a physical layer, or from the UE to the base station using an uplink data channel of a physical layer. For example, the higher signaling (or higher layer signaling) may also be referred to as, but is not limited to, RRC signaling, PDCP signaling, or a medium access control (MAC) control element (MAC CE).

Hereinafter, in the present disclosure, when the UE determines whether cooperative communication is applied, various methods, such as a method in which PDCCH(s) allocating PDSCH to which cooperative communication is applied has a specific format, a method in which PDCCH(s) allocating PDSCH to which cooperative communication is applied includes a specific indicator that notifies whether to apply the cooperative communication, a method in which PDCCH(s) allocating PDSCH to which cooperative communication is applied is scrambled by a specific RNTI, or a method for assuming that cooperative communication is applied in a specific section indicated by a higher layer, may be used, but are not limited thereto. For the convenience of description below, the case in which the UE receives the PDSCH to which the cooperative communication is applied based on the conditions similar to the above is referred to as non-coherent joint transmission (NC-JT) case. That is, the NC-JT case in the present disclosure includes reception of the PDSCH to which the cooperative communication is applied, and whether to apply the cooperative communication may be identified based on at least one or at least one combination of the above-described conditions/methods.

Hereinafter, in the present disclosure, determining the priority between A and B may be variously referred to as selecting the one having a higher priority based on a predetermined priority rule and performing an operation corresponding to the selected higher priority, omitting or dropping an operation corresponding to the one having a lower priority, etc.

Hereinafter, the present disclosure describes the above examples through multiple embodiments, but these embodiments are not independent and one or more embodiments can be applied simultaneously or in combination.

Hereinafter, embodiments of the present disclosure will be described in detail with reference to the accompanying drawings. Hereinafter, the base station is an entity that performs resource allocation of a terminal, and may be at least one of a gNode B, a gNB, an eNode B, a Node B, a base station (BS), a wireless access unit, a base station controller, or a node on a network. The terminal may include user equipment (UE), a mobile station (MS), a cellular phone, a smartphone, a computer, or a multimedia system capable of performing a communication function. Hereinafter, while the present disclosure is described below using the 5G system as an example, the embodiments of the present disclosure may also be applied to other communication systems with similar technical backgrounds or channel types. For example, LTE or LTE-A mobile communications, as well as mobile communication technologies developed after the 5G may be included. Therefore, the embodiments of the present disclosure may be applied to other communication systems with some modifications, as determined by those skilled in the art, without significantly departing from the scope of the present disclosure. An embodiment of the present disclosure may be applied to FDD, TDD, or XDD systems, but is not limited thereto.

In addition, in describing the present disclosure, when it is decided that a detailed description for the functions or configurations related to the present disclosure may unnecessarily obscure the gist of the present disclosure, the detailed description therefor will be omitted. Further, the following terms are defined in consideration of the functions in the present disclosure and may be construed in different ways by the intention of users and operators or practice, etc. Therefore, the definitions thereof should be construed based on the contents throughout the specification.

Hereinafter, in describing the present disclosure, the higher layer signaling may refer to signaling corresponding to at least one or one or more combinations of signaling described below.

- Master Information Block (MIB)
- System Information Block (SIB) or SIB X (X=1, 2, ...)
- Radio Resource Control (RRC)
- Medium Access Control (MAC) Control Element (CE)

In addition, the L1 signaling may refer to signaling corresponding at least one or one or more combinations of signaling methods using physical layer channels or signaling described below.

- Physical downlink control channel (PDCCH)
- Downlink control information (DCI)
- UE-specific DCI
- Group common DCI
- Common DCI
- Scheduling DCI (e.g., DCI used for scheduling downlink or uplink data)
- Non-scheduling DCI (e.g., DCI not used for scheduling downlink or uplink data)
- Physical Uplink Control Channel (PUCCH)
- Uplink Control Information (UCI)

[MC-DCI related]

In the present disclosure, one DCI may be a single-DCI or may be one DCI format, and multiple DCIs may be multi-DCIs or may be in multiple DCI formats. In the present disclosure, one DCI may be one PDCCH and/or may be transmitted and received through one PDCCH, and multiple DCIs may be in multiple PDCCHs and/or may be transmitted and received through multiple PDCCHs.

In general, the UE receives one DCI, and the one DCI may include scheduling information for one cell. For example, for DCI format 0_0/0_1/0_2, one PUSCH may be scheduled for one uplink cell. In addition, for DCI format 1_0/1_1/1_2, one PDSCH may be scheduled for one downlink cell. The scheduled cell may be indicated by a carrier indication field (CIF) of the DCI format.

However, according to this scheme, when the PDSCH or the PUSCH is scheduled in each of a plurality of cells, multiple DCIs should be transmitted and received. Accordingly, a significant amount of DCI overhead may occur. To reduce the DCI overhead, one DCI may schedule the PDSCH or the PUSCH for each of the plurality of cells. This may be conveniently referred to as multi-cell DCI (MC-DCI). In the present disclosure, the MC-DCI may be one DCI that schedules the PDSCH and/or PUSCH to each of the plurality of cells.

Cells that may be scheduled in the MC-DCI may be configured via the higher layer. For example, it is assumed that the MC-DCI may schedule cell 0, cell 1, cell 2, and cell 3 (simultaneously). When the UE receives the MC-DCI, the UE may receive scheduling information for cell 0, cell 1, cell 2, and cell 3. That is, the UE may acquire the scheduling information for cell 0, cell 1, cell 2, and cell 3 from the MC-DCI. For example, the MC-DCI being able to schedule cell 0, cell 1, cell 2, and cell 3 may be configured from the higher layer. Here, the scheduling information may include time domain resource assignment (TDRA) information and/or frequency domain resource assignment (FDRA) information for transmitting and receiving the data channel (PDSCH for downlink, PUSCH for uplink) in each cell. Therefore, the UE may acquire scheduling information for each cell through the MC-DCI and transmit and receive the data channel to and from each cell.

In a specific situation, the base station may not be able to schedule all cells configured for the UE. The scheduling may not be possible for at least some of the plurality of cells configured by the base station for the UE. For example, the base station may configure, for the UE, four cells (e.g., cell 0, cell 1, cell 2, and cell 3) scheduled by the MC-DCI, but some of these cells may not be scheduled due to, for example, being scheduled for another UE, poor channel conditions, or other various reasons. In this case, the base station should be able to indicate, to the UE, the scheduling cells among the preconfigured cells scheduled by the MC-DCI. In other words, the base station should be able to indicate one or more cells that are (actually) scheduled among the plurality of cells configured to be scheduled by the MC-DCI.

This may be indicated based on one of the following two methods. Alternatively, this may be indicated based on at least one combination of the following two methods.

In the first method, the UE may acquire, from the MC-DCI, information indicating cells co-scheduled (co-scheduled cells) by the current MC-DCI among the preset cells (e.g., cell 0, cell 1, cell 2, and cell 3). That is, one or more cells (actually) co-scheduled by the MC-DCI among the plurality of cells configured to be scheduled by the MC-DCI may be identified based on the corresponding MC-DCI. More specifically, the base station may configure a table including the co-scheduled cells for the UE. For example, each row of this table may have a unique index. The index of each row (and/or each row) may include the indexes of the co-scheduled cells. For example, {cell 0, cell 1} may be configured in row 0, {cell 2, cell 3} may be configured in row 1, and {cell 0, cell 1, cell 2, cell 3} may be configured in row 2. An example of the table configured for the UE may be referred to Table 18.

[Table 18]

| index | Co-scheduled cell |
|---|---|
| 0 | {0, 1} |
| 1 | {2, 3} |
| 2 | {0, 1, 2, 3} |

The UE may acquire the value indicating the row index from the MC-DCI. Accordingly, the UE may determine the scheduled cell based on the value. For example, the MC-DCI may include information about the row index, and the UE may identify the scheduled cell based on the row index and the table acquired from the MC-DCI. For example, when row 0 is indicated from the MC-DCI, the UE may identify that cell 0 and cell 1 are scheduled cells. For example, when row 1 is indicated from the MC-DCI, the UE may identify that cell 2 and cell 3 are scheduled cells. For example, when row 2 is indicated from the MC-DCI, the UE may identify that cell 0, cell 1, cell 2, and cell 3 are scheduled cells.

In the present disclosure, a table is configured for mapping relation between the scheduled cells (or indices of scheduled cells) and indices indicated from the DCI, and the scheduled cells may be identified based on the table and the indices indicated from the DCI.

While the present disclosure describes an embodiment in which the co-scheduled cells are identified based on the row indices in the table, the present disclosure is not limited thereto. For example, the identification of such cells can be based on column indicies in the table, whereby the rows can be replaced by columns in the embodiment described above.

In the second method, the UE may make a determination based on the FDRA field of the MC-DCI.

FIG. 11 is a diagram illustrating an example in which MC-DCI includes a plurality of FDRA fields according to an embodiment of the present disclosure.

Referring to FIG. 11, MC-DCI 1100 may include a plurality of FDRA fields. Each FDRA field may have a corresponding cell. That is, when the cells that may be co-scheduled by MC-DCI 1100 are configured to cell 0 1120, cell 1 1121, cell 2 1122, and cell 3 1123, an FDRA field 1110 for cell 0, an FDRA field 1111 for cell 1, an FDRA field 1112 for cell 2, and an FDRA field 1113 for cell 3 may be included. Based on the FDRA field value, it may be determined whether each cell is scheduled. The cells scheduled based on the FDRA field value may be referred to as actually co-scheduled cells.

The FDRA field may be divided into valid and invalid values. The valid value may be the case where there is present the frequency domain allocation corresponding to the FDRA field value. Conversely, the invalid value may be the case where there is no frequency domain allocation corresponding to the FDRA field value.

For example, the valid and invalid values are described based on FDRA type-0. The FDRA type-0 is a method for indicating scheduled RBs (or RBGs) based on the bitmap. Here, each bit may have a corresponding RB (or RBG). When a bit is '1', the corresponding RB (or RBG) may be scheduled, while when a bit is '0', the corresponding RB (or RBG) may not be scheduled. Therefore, a value may be determined as valid when at least one bit is '1', and an invalid value when all bits are '0'.

For example, the valid and invalid values are described based on FDRA type-1. The FDRA type-1 is a method for indicating scheduled RBs based on a resource indication value (RIV). Here, the FDRA type-1 may schedule contiguous RBs in the frequency domain. The FDRA type-1 may indicate an index of a start RB and the number of contiguous RBs. The RIV value may be one of 0, 1,..., N*(N+1)/2-1. Here, N is the number of RBs included in the frequency domain. Therefore, when the RIV value is one of 0, 1,..., N*(N+1)/2-1, it may be determined as a valid value, while a value greater than or equal to N*(N+1)/2 may be determined as an invalid value.

FIG. 12 is a diagram illustrating an example of determining cells that are actually co-scheduled based on the plurality of FDRA fields included in the MC-DCI according to an embodiment of the present disclosure.

Referring to FIG. 12, MC-DCI 1200 may include FDRA fields (e.g., FDRA field 1210 for cell 0, FDRA field 1211 for cell 1, FDRA field 1212 for cell 2, FDRA field 1213 for cell 3) for each of the plurality of cells (e.g., cell 0 1220, cell 1 1221, cell 2 1222, cell 3 1223). The UE may determine validity of each FDRA field. For example, the UE may determine that the FDRA field 1210 for cell 0, the FDRA field 1212 for cell 2, and the FDRA field 1213 for cell 3 are valid, and the FDRA field 1211 for cell 1 is invalid. In this case, cell 1, which is determined to be invalid, is an unscheduled cell, while cells 0, 2, and 3, which are determined to be valid, may be scheduled cells.

Some of the cells scheduled by the MC-DCI may be in a licensed band, while others may be in an unlicensed band (or shared spectrum). For example, for the cells in the unlicensed band, FDRA type-2 may be used for uplink scheduling. Specific information about the FDRA type-2 and an embodiment in which the FDRA type-2 is used will be described later.

The present disclosure discloses a method for determining a scheduled cell from a single DCI when the UE supports multi-cell scheduling with the single DCI.

The UE may receive multiple frequency domain resource assignment (FDRA) fields in a single DCI and determine cells corresponding to each FDRA field. The UE may determine whether the cell is scheduled based on the FDRA type and the FDRA field value of the cell. The UE may identify whether the cell is scheduled and/or whether the scheduled cells and/or the unscheduled cells are identified based on one or more of the FDRA type or the FDRA field. For example, the method for interpreting an FDRA field may vary depending on the subcarrier spacing of the corresponding cell.

When the UE is configured with the FDRA type-2 for a cell, whether the cell is scheduled may be determined based on at least one or one or more combinations of the following.

When the one cell has a 15kHz subcarrier spacing, the UE may determine that the cell is unscheduled when the FDRA field value is as follows.

A first case is a case where bits in the FDRA field are all "1".

A second case is a case where first 6 bits in the FDRA field are all "1". That is, the second case is a case where 6 most significant bits (MSBs) of the bits in the FDRA field are all "1".

A third case is a case where last Y bits in the FDRA field are all "1". That is, the third case is a case where Y least significant bits (LSBs) of the bits in the FDRA field are all "1".

When the one cell has a 30kHz subcarrier spacing, the UE may determine that the cell is unscheduled when the FDRA field value is as follows.

The first case is a case where first 5 bits in the FDRA field are all "0" and the last Y bits are all "1". That is, 5 most significant bits (MSBs) in the FDRA field are all "0" and Y LSBs are all "1".

The second case is a case where bits in the FDRA field are all "0".

The third case is a case where first 5 bits in the FDRA field are all "0". That is, 5 MSBs of the FDRA field bits are all "0".

A fourth case is a case where last Y bits in the FDRA field are all "1". That is, the Y LSBs in the FDRA field bits are all "1".

Hereinafter, the embodiments will be described in more detail.

Embodiment 1: When one cell has 15kHz subcarrier spacing

The UE may confirm the information about the subcarrier spacing and the FDRA type of each cell included in a set of candidate cells scheduled by the MC-DCI. When one of the cells included in the set of the candidate cells scheduled by the MC-DCI is configured with the FDRA type-2, the UE may confirm whether the subcarrier spacing of the cell is 15kHz ($\mu$=0) or 30kHz ($\mu$=1). The present embodiment may be the case where the UE confirms that the subcarrier spacing of the cell is 15kHz ($\mu$=0).

FIG. 13 is a diagram illustrating an example of a field indicating frequency domain resource assignment information depending on subcarrier spacing of cells according to an embodiment of the present disclosure.

(a) of FIG. 13 illustrates an example of a field indicating frequency domain resource assignment information when the subcarrier spacing of the cell is 15 kHz.

Referring to (a) of FIG. 13, when the subcarrier spacing of the cell is 15 kHz, the length of the field indicating the frequency domain allocation information of the cell within the MC-DCI may be 6+Y bits. Here, 6 bits may indicate a start index $m_0$ and length L of M=10 interlaces included in one RB-set, and Y bits may indicate the scheduled RB-set. Here, Y = $\left\lceil \log_2 \frac{N_{\text{RB-set,UL}}^{\text{BWP}}\left(N_{\text{RB-set,UL}}^{\text{BWP}}+1\right)}{2} \right\rceil$. Here, Y bits may indicate the index and length of the start RB set among the RB sets included in the UL BWP. In the present disclosure, $N_{\text{RB-set,UL}}^{\text{BWP}}$ may be the number of RB-sets configured for an indicated active UL BWP. In the present disclosure, for convenience, 6 bits and Y bits may be referred to as a RIV scheme (or RIV-like).

More specifically, 6 bits are as follows.

When $\mu$=0, X=6 most significant bits (MSBs) of the resource block allocation information (or frequency domain resource assignment information) may represent an interlace index set $m_0$+1 allocated to the UE. Here, the indication for the interlace index set is composed of a resource indication value (RIV). When 0 ≤ RIV < M(M+1)/2 and 1=0,1,...,L-1, the resource indication value corresponds to the start interlace index $m_0$ and the number of contiguous interlace indices. The resource indication value is defined as follows.

[RIV formula]

if $(L-1) \le \lfloor M/2 \rfloor$ then

$$RIV = M(L-1) + m_0$$

else

$$RIV = M(M-L+1) + (M-1-m_0)$$

For $RIV \ge M(M+1)/2$, the RIV value correspond to the start interlace index $m_0$ and I value in Table 19 below.

[Table 19] **$m_0$ and $l$ for $RIV \ge M(M+1)/2$.**

| $RIV - M(M+1)/2$ | $m_0$ | $l$ |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |

(continued)

| *RIV - M(M + 1)/2* | $m_0$ | *l* |
|---|---|---|
| 6 | 3 | {0, 5} |
| 7 | 4 | {0, 5} |

Referring to the RIV formula or Table 19 above, among the RIV values, 0,1,...,M*(M+1)/2-1=54 may indicate the start interlace index and the number of contiguous interlace indices according to the RIV formula. Thereafter, RIV = M*(M+1)/2=55, M*(M+1)/2+1=56,..., M*(M+1)/2+7=62 may receive indication of the start interlace index $m_0$ and 1 value according to Table 17. The 6 bits of the RIV value may represent one of values 0,1,...,63, and 0,1,...,62 are values used to schedule the interlace. However, RIV=63 (6 bits in binary are '111111') may be an unused value. In other words, there may be no scheduled interlace corresponding to the above value (RIV=63). Therefore, the unscheduled cells may be indicated using the value (RIV=63 (6 bits in binary are '111111').

More specifically, Y bits are as follows.

When $\mu$=0 to $\mu$=1, $Y = \left\lceil \log_2 \frac{N_{\text{RB-set,UL}}^{\text{BWP}}(N_{\text{RB-set,UL}}^{\text{BWP}}+1)}{2} \right\rceil$ least significant bit (LSB) of the resource block allocation information (or frequency domain resource assignment information) indicates the contiguous RB to the UE. For example, Y bits may be present in DCI format 0_1. The resource assignment field is composed of a resource indication value ($RIV_{\text{RB-set}}$). For $0 \leq RIV_{\text{RB-set}} < N_{\text{RB-set,UL}}^{\text{BWP}}(N_{\text{RB-set,UL}}^{\text{BWP}} + 1)/2$, , l=0,1,...,$L_{\text{RBset}}$-1, the RIV indicates the start RB set index ( $N_{\text{RB-set,UL}}^{\text{start}}$ ) and the number ($L_{\text{RB-set}}$) of contiguous RB sets. The resource indication value is defined as follows.

[$RIV_{\text{RB-set}}$ formula]

if $(L_{\text{RB-set}} - 1) \leq \lfloor N_{\text{RB-set,UL}}^{\text{BWP}}/2 \rfloor$ then

$$RIV_{\text{RB-set}} = N_{\text{RB-set,UL}}^{\text{BWP}}(L_{\text{RB-set}} - 1) + N_{\text{RB-set,UL}}^{\text{start}}$$

else

$$RIV_{\text{RB-set}} = N_{\text{RB-set,UL}}^{\text{BWP}}(N_{\text{RB-set,UL}}^{\text{BWP}} - L_{\text{RB-set}} + 1) + (N_{\text{RB-set,UL}}^{\text{BWP}} - 1 - N_{\text{RB-set,UL}}^{\text{start}})$$

where $N_{\text{RB-set,UL}}^{\text{start}} = 0,1, \cdots N_{\text{RB-set,UL}}^{\text{BWP}} - 1$, $L_{\text{RB-set}} \geq 1$ and shall not exceed $N_{\text{RB-set,UL}}^{\text{BWP}} - N_{\text{RB-set,UL}}^{\text{start}}$

Referring to the above formula, the following may be observed.

- When one RB-set is included in the UL BWP, ( $N_{\text{RB-set,UL}}^{\text{BWP}} = 1$ ), Y=0 bits (Y=0). Therefore, when Y=0 bits, the unscheduled cells may not be indicated by the Y bits.
- When two RB-sets are included in the UL BWP, ( $N_{\text{RB-set,UL}}^{\text{BWP}} = 2$ ), Y=2 bits (Y=2) . Here, $RIV_{\text{RB-set}}$=0,1,2 may be used to indicate the start RB set index and the number of contiguous RB sets. The Y bits may have values of 0, 1,..., 3. Therefore, there may be no scheduled RB-set corresponding to Y bits of 3 (both 2 bits are '11'. 2 bits are '11' in binary). Therefore, the unscheduled cells may be indicated by the value (3 (2 bits are '11' in binary)).
- When three RB-sets are included in the UL BWP, ( $N_{\text{RB-set,UL}}^{\text{BWP}} = 3$ ) , Y=3 bits (Y=3). Here, $RIV_{\text{RB-set}}$ =0,1,2,3,4,5 may be used to indicate the start RB set index and the number of contiguous RB sets. The Y bits may have values of 0, 1,..., 7. Therefore, there may be no scheduled RB-set corresponding to Y bits of 7 (all 3 bits are '111'. 3 bits are '111' in binary). Therefore, the unscheduled cells may be indicated by the value (7 (3 bits are '111' in binary)).

- When four RB-sets are included in the UL BWP, ( $N_{\text{RB-set,UL}}^{\text{BWP}} = 4$ ), Y=4 bits (Y=4). Here, $RIV_{\text{RB-set}}$ =0,1,...,9 is used to indicate the start RB set index and the number of contiguous RB sets. The Y bits may have values of 0, 1,..., 15. Therefore, there may be no scheduled RB-set corresponding to Y bits of 15 (all 4 bits are '1111'. 4 bits are '1111' in binary). Therefore, the unscheduled cells may be indicated by the value (15 (4 bits are '1111' in binary)).

- When five RB-sets are included in the UL BWP, ( $N_{\text{RB-set,UL}}^{\text{BWP}} = 5$ ), Y=4 bits (Y=4). Here, $RIV_{\text{RB-set}}$ =0,1,...,14 is used to indicate the start RB set index and the number of contiguous RB sets. The Y bits may have values of 0, 1,..., 15. Therefore, there may be no scheduled RB-set corresponding to Y bits of 15 (all 4 bits are '1111'. 4 bits are '1111' in binary). Therefore, the unscheduled cells may be indicated by the value (15 (4 bits are '1111' in binary)).

In summary, in the remaining cases excluding the case where Y=0 among the sizes of Y bits, when all Y bits are '1', the unscheduled cells may be indicated. In other words, when all bits included in the Y LSB of the FDRA are '1', the unscheduled cells may be indicated.

In the present disclosure, the method for indicating that a cell with 15kHz subcarrier spacing is not scheduled may be one or at least one combination of the following. In the description of the present method, the FDRA field is a field corresponding to the cell with 15kHz subcarrier spacing. The FDRA type may be the FDRA type-2.

- In a first method, the UE may determine whether a cell is scheduled based on all bits (6+Y bits) in the FDRA field. For example, when all bits in the FDRA field are '1', the UE may determine that the cell is the unscheduled cells. Here, the FDRA field may include 6 bits MSB and Y bits LSB. Therefore, when all bits are '1' based on a total of 6+Y bits (when all bit values of bits included in 6+Y bits are 1), the UE may determine that a cell with 15kHz subcarrier spacing corresponding to the FDRA field is not scheduled. For example, when all 6 bits MSBs are '1' and the remaining Y bits LSBs are not all '1' (when all bit values of bits included in 6 MSBs are 1 and bit values of at least some of bits included in Y LSB are 0 or when all bit values of bits included in the 6 MSBs are 1 and bit values of bits included in the Y LSB are all 0), the UE may determine that the DCI format including the information is an error case. Alternatively, when all Y bits LSBs are '1' and the remaining 6 bits MSBs are not all '1' (when all bit values of bits included in Y LSB are 1 and bit values of at least some of bits included in 6 MSBs are 0 or when all bit values of bits included in the Y LSB are 1 and bit values of bits included in the 6 MSBs are all 0), the UE may determine that the DCI format including the information is an error case. When the UE determines that the information is the error case, the UE may discard (or ignore) the information indicated by the DCI format without applying the information. When the UE determines that the information is the error case, the UE may discard the information about the cell (cell corresponding to the FDRA field determined to be the error case) among the information indicated by the DCI format without applying the information, and apply the information about the remaining cells (the remaining cells excluding the cell corresponding to the FDRA field determined to be the error case).
- In a second method, the UE may determine whether a cell is scheduled based on only the 6 bits MSB of the FDRA field. The UE may identify whether a cell is scheduled through the 6 MSBs of the FDRA field. For example, when all bits of the 6 bits MSB of the FDRA field are '1' (when the bit values of all bits included in the 6 MSBs are 1), the UE may determine that the cell (the cell corresponding to the FDRA field) is the unscheduled cell. Accordingly, the UE may determine that the cell of the 15kHz subcarrier spacing corresponding to the FDRA field is not scheduled when all bits are '1' based on a total of 6 bits MSB. For example, in this case, the bits of the Y bits LSB may not provide information. That is, regardless of the value of the Y bits LSB, it may be determined whether a cell is scheduled based on the 6 bits MSB. For example, the Y bits LSB may be discarded, ignored, or not included in the FDRA field (e.g., Y may be 0).
- In a third method, the UE may determine whether a cell is scheduled based on only the Y bits LSB of the FDRA field. The UE may identify whether a cell is scheduled through the Y LSB of the FDRA field. For example, when all bits of the Y bits LSB of the FDRA field are '1' (when the bit values of all bits included in the Y LSB are 1), the UE may determine that the cell (the cell corresponding to the FDRA field) is the unscheduled cell. Accordingly, the UE may determine that the cell with 15kHz subcarrier spacing corresponding to the FDRA field is not scheduled when all bits are '1' based on a total of Y bits LSB. For example, in this case, the bits of the 6 bits MSB may not provide information. That is, regardless of the value of the 6 bits MSB, it may be determined whether a cell is scheduled based on the Y bits LSB. For example, the 6 bits MSB may be discarded, ignored, or not included in the FDRA field.

According to an embodiment, the third method may be used when Y>0. When Y=0, the second method may be used. That is, the second or third method may be selectively used based on the Y value. That is, the method to be used by the UE may be determined based on the Y value (the bit size of the Y LSB of the FDRA field).

Embodiment 2: When one cell has 30kHz subcarrier spacing

The UE may confirm the information about the subcarrier spacing and the FDRA type of each cell included in a set of candidate cells scheduled by the MC-DCI. When one of the cells included in the set of the candidate cells scheduled by the MC-DCI is configured with the FDRA type-2, the UE may confirm whether the subcarrier spacing of the cell is 15kHz ($\mu$=0) or 30kHz ($\mu$=1). The present embodiment may be the case where the UE confirms that the subcarrier spacing of the cell is 30kHz ($\mu$=1).

(b) of FIG. 13 illustrates an example of a field indicating frequency domain resource assignment information when the subcarrier spacing of the cell is 30kHz.

Referring to (b) of FIG. 13, when the subcarrier spacing of the cell is 30kHz, the length of the field indicating the frequency domain allocation information of the cell within the MC-DCI may be 5+Y bits. Here, 5 bits may indicate, via a bitmap, whether M=5 interlaces included within a single RB-set are scheduled. That is, each of the 5 bits may be used to indicate whether one interlace is scheduled. Here, an interlace corresponding to a bit whose value is '1' among the 5 bits may be determined to be scheduled. The interlace corresponding to a bit whose value is '0' among the 5 bits may be determined not to be scheduled. Y bits indicate the scheduled RB-set. $Y = \left\lceil \log_2 \frac{N_{\text{RB-set,UL}}^{\text{BWP}}\left(N_{\text{RB-set,UL}}^{\text{BWP}}+1\right)}{2} \right\rceil$. Here, the Y bits may indicate the index and length of the start RB set among the RB sets included in the UL BWP. In the present disclosure, $N_{\text{RB-set,UL}}^{\text{BWP}}$ may be the number of RB-sets configured for an indicated active UL BWP. In the present disclosure, for convenience, the 5 bits are referred to as a bitmap scheme and the Y bits are referred to as a RIV scheme (or RIV-like).

The 5 bits may indicate the interlace scheduled based on the bitmap. The UE may determine that an interlace corresponding to '1' is scheduled when each bit of the 5 bits is '1'. That is, the interlace corresponding to a bit whose value is '1' among the 5 bits may be determined to be scheduled. When all 5 bits are '0', there may be no interlace that is scheduled. Therefore, when all 5 bits are '0', this may be used to determine that the cell is not scheduled.

The Y bits in Embodiment 2 are equal to those in Embodiment 1, and therefore, a description thereof will be omitted. This may refer to the description of the Y bits in Embodiment 1.

The FDRA field of a cell with 30 kHz subcarrier spacing includes 5+Y bits. The 5 bits MSB indicates the interlace scheduled within the RB set by the bitmap scheme, and the Y bits LSB indicates RB sets scheduled by the RIV scheme. Therefore, whether the cell is scheduled may be determined based on the values of the 5 bits MSB and the Y bits LSB.

In the present disclosure, the method for indicating that a cell with 30kHz subcarrier spacing is not scheduled may be one or at least one combination of the following. In the description of the present method, the FDRA field is a field corresponding to the cell with 30kHz subcarrier spacing. The FDRA type may be the FDRA type-2.

-- In a first method, the UE may determine whether a cell is scheduled based on all bits (5+Y bits) in the FDRA field. For example, when all bits in the FDRA field are '0', the UE may determine that a cell with 30kHz subcarrier spacing are the unscheduled cells. Here, the FDRA field may include 5 bits MSB and Y bits LSB. Therefore, when all bits are '0' based on a total of 5+Y bits (when all bit values of bits included in 5+Y bits are 0), the UE may determine that the cell with 30kHz subcarrier spacing corresponding to the FDRA field is not scheduled. For example, when all Y bits LSB are '0', the corresponding value may exist according to $RIV_{\text{RB-set}}$ formula. However, since all 5 bits MSB are '0', the RB set indicated by the Y bits LSB may not be used as information about whether or not scheduling is performed. In other words, since it is determined that there is no scheduled interlace because all 5 bits MSB are '0', the RB set corresponding to the Y bits LSB may be ignored.

- In a second method, the UE may determine whether a cell is scheduled based on only the 5 bits MSB of the FDRA field. The UE may identify whether the cell is scheduled through the 5 MSBs of the FDRA field. For example, when all bits of the 5 bits MSB of the FDRA field are '0' (when the bit values of all bits included in the 5 MSBs are 1), the UE may determine that the cell (the cell corresponding to the FDRA field) is the unscheduled cell. Accordingly, the UE may determine that the cell with the 30kHz subcarrier spacing corresponding to the FDRA field is not scheduled when all bits are '0' based on a total of 5 bits MSB. For example, in this case, the bits of the Y bits LSB may not provide information. That is, regardless of the value of the Y bits LSB, it may be determined whether a cell is scheduled based on the 5 bits MSB. For example, the Y bits LSB may be discarded, ignored, or not included in the FDRA field (e.g., Y may be 0).
- In a third method, the UE may determine whether a cell is scheduled based on only the Y bits LSB of the FDRA field. The UE may identify whether a cell is scheduled through the Y LSB of the FDRA field. For example, when all bits of the Y bits LSB of the FDRA field are '1' (when the bit values of all bits included in the Y LSB are 1), the UE may determine that the cell (the cell corresponding to the FDRA field) is the unscheduled cell. Accordingly, the UE may determine that the cell with 30kHz subcarrier spacing corresponding to the FDRA field is not scheduled when all bits are '1' based on a total of Y bits LSB. For example, in this case, the bits of the 5 bits MSB may not provide information. That is, regardless of the value of the 5 bits MSB, it may be determined whether a cell is scheduled based on the Y bits LSB. For example, the 5 bits MSB may be discarded, ignored, or not included in the FDRA field.

According to an embodiment, the third method may be used when Y>0. When Y=0, the second method may be used. That is, the second or third method may be selectively used based on the Y value. That is, the method to be used by the UE may be determined based on the Y value (the bit size of the Y LSB of the FDRA field).

FIG. 14 is a flowchart illustrating a method for determining scheduled cells by a UE according to Embodiments 1 and 2 of the present disclosure. The method of FIG. 14 is illustrative, and various modifications may be made to the method illustrated in the flowchart of FIG. 14. For example, although illustrated as a series of steps, various steps in each drawing may overlap, occur in parallel, occur in different orders, or occur multiple times. In other examples, steps may be omitted or replaced with other steps.

In step 1400, the UE may be configured with cells that may be scheduled by the MC-DCI. Each of the cells may be configured with the FDRA. For example, for a licensed band cell, FDRA type-0 and FDRA type-1 may be configured. For an unlicensed band cell, FDRA type-2 may be configured. For example, the UE may know whether a cell is the unlicensed band cell through higher layer information. The UE may identify whether the cell is the licensed band cell or the unlicensed band cell based on the higher layer information.

In step 1401, when the FDRA type-2 is configured for any one of the cells that may be scheduled by the MC-DCI, the UE may acquire information about the subcarrier spacing of the cell from the higher layer. For example, the subcarrier spacing of the cell may be 15 kHz or 30 kHz.

In step 1402, the UE may determine the validity of the FDRA field of the cell based on the subcarrier spacing. For example, for the15 kHz subcarrier spacing, when all bits are '1', the bits may be determined as an invalid association. For the 30 kHz subcarrier spacing, when all bits are '0', the bits may be determined as the invalid association. This is an example, and the present disclosure is not limited thereto. More specific examples may refer to the contents of the embodiments described in Embodiments 1 and 2 for each subcarrier spacing.

In step 1403, the UE may acquire the FDRA field value of the cell (e.g., one or more cells configured as schedulable by the MC-DCI) among the FDRA fields of the MC-DCI. Here, for the 15kHz subcarrier spacing, the FDRA field value is 6+Y bits, and for 30kHz subcarrier spacing, the FDRA field value is 5+Y bits.

In step 1404, the UE may compare the bits acquired in step 1403 with the invalid association determined in step 1402. When the acquired bits are an invalid association, the cell may be determined to be an unscheduled cell.

Embodiment 3: Whether to apply MC-DCI information depending on whether cell is scheduled

According to an embodiment of the present disclosure, a method may be provided for determining whether to apply the MC-DCI information to the cell when the UE is indicated via the MC-DCI that some cells are unscheduled. Embodiment 3 may be applied in combination with Embodiments 1 and/or 2. An embodiment of the present disclosure is described based on the BWP indicator field, the transmit power control (TPC) command for scheduled PUSCH field, and the minimum applicable scheduling offset indicator field of the MC-DCI. However, the present disclosure may be applied to the fields included in the MC-DCI, and an embodiment of the present disclosure is not limited to a specific field. An embodiment of the present disclosure may be implemented based on at least some of the fields included in the MC-DCI.

The following fields are fields to which the embodiment of the present disclosure can be applied. An embodiment of the present disclosure may be applied to at least one or at least one combination of the following fields.

For example, the fields that may be included in the MC-DCI for scheduling downlink may include HARQ process number, modulation and coding scheme (MCS), BWP indicator, FDRA, VRB-to-PRB mapping, PRB bundling size indicator, rate matching indicator, ZP CSI-RS trigger, antenna port(s), TCI, DMRS sequence initialization, SRS request, SRS offset indicator, minimum applicable scheduling offset indicator, etc., and an embodiment is not limited thereto. At least some of the fields exemplified above may be included in the MC-DCI for scheduling the downlink.

For example, the fields that may be included in the MC-DCI for scheduling the uplink may include HARQ process number, MCS, BWP indicator, FDRA, frequency hopping flag, TPC command for scheduled PUSCH, Open-loop power control parameter set indication, antenna port(s), precoding information and number of layers, PTRS-DMRS association, DMRS sequence initialization, SRS request, SRS resource indicator, SRS offset indicator, UL/SUL indicator, CSI request, a UL-SCH indicator, minimum applicable scheduling offset indicator, etc., and an embodiment is not limited thereto. At least some of the fields exemplified above may be included in the MC-DCI for scheduling the uplink.

The UE may acquire one field from the MC-DCI. The field may have one value, and the UE operation corresponding to the value may be defined. The UE operation corresponding to the value may be defined for each cell. That is, a first operation of a first cell, a second operation of a second cell, etc., corresponding to the value may be defined. The operation may be preconfigured from the higher layer.

The BWP indicator field will be described as an example. When the BWP indicator field value is '0', the UE may change the BWP corresponding to BWP index = 0 to the active BWP. When the BWP indicator field value is '1', the UE may change the BWP corresponding to BWP index = 1 to the active BWP.

According to an embodiment of the present disclosure, a method applicable to cases where some cells are unscheduled in the MC-DCI may be provided. In this case, the UE may not receive a channel from the cell and/or may not transmit a channel to the cell. For example, when the MC-DCI is the DCI that schedules the downlink, the channel may be the PDSCH. For example, when the MC-DCI is the DCI that schedules the uplink, the channel may be the PUSCH. When some cells are identified as unscheduled through Embodiments 1 and/or 2 described above, it may be ambiguous whether the UE applies the operation (a predefined operation per cell) to the cell. For example, when the first cell is a scheduled cell and the second cell is an unscheduled cell, the UE may apply the first operation to the first cell based on the value, but it may be ambiguous whether the UE applies the second operation to the second cell.

The BWP indicator field will be described as an example. When the BWP indicator field value is indicated by a specific value, the UE may change the BWP corresponding to the scheduled cell to the active BWP and transmit and receive a channel (e.g., the PDSCH or the PUSCH) on the active BWP. However, since the UE does not transmit or receive the channels to and from the unscheduled cells, it may be ambiguous whether the UE should change the BWP.

The TPC command for scheduled PUSCH field will be described as an example. For example, the TPC command for scheduled PUSCH field may indicate a transmit power (transmission power) value corresponding to each cell. For the scheduled cell, the UE may store/apply the transmit power value. However, since the UE does not transmit the PUSCH to the unscheduled cell, it may be ambiguous whether the UE should store/apply the transmit power value. For example, the transmit power value indicated in the TPC command for scheduled PUSCH field may be accumulated and applied. That is, the final transmit power value may be indicated/determined by adding the previously indicated value and the currently indicated value. Therefore, even if the cell does not transmit the PUSCH, when the UE stores the value, the final transmit power value may vary during the transmission of the next PUSCH.

The minimum applicable scheduling offset indicator field will be described as an example. For example, it is assumed that the minimum applicable scheduling offset indicator field indicates the minimum applicable scheduling offset value corresponding to each cell. (When the minimum applicable scheduling offset value indicates the minimum K0 value (minimum value K0), the UE does not expect the PDSCH (or the PUSCH) to be scheduled to a value smaller than the minimum K0 value. That is, the UE may omit buffering for receiving the PDSCH (or the PUSCH) for the value smaller than the minimum K0 value.) It may be ambiguous whether the indicated minimum applicable scheduling offset value applies only to the scheduled cell or to all cells.

FIG. 15 is a diagram illustrating an example in which a UE applies different fields of the MC-DCI to scheduled cells and unscheduled cells according to an embodiment of the present disclosure.

According to an embodiment of the present disclosure, a method for resolving the above-described ambiguity may be provided. For example, one or a combination of at least one of the following methods may be used.

Referring to (a) of FIG. 15, in the first method, the UE may apply an operation corresponding to the value indicated by the MC-DCI to all cells, including the unscheduled cells. The UE may determine whether cells are scheduled based on the acquired FDRA field value and invalid association (1500). Even if the unscheduled cells exist, the UE may apply an operation corresponding to the value indicated by the MC-DCI field to all cells (cells that may be scheduled by the MC-DCI) (1501).

For example, when the BWP indicator field is indicated as a specific value, the UE may change the BWP of all cells to the active BWP. In addition, the channels (the PDSCH or the PUSCH) may be transmitted and received only in the scheduled cells on active BWP.

For example, the transmit power value indicated in the TPC command for scheduled PUSCH field may be stored for all cells (cells that may be scheduled by the MC-DCI). In addition, the UE may use the indicated transmit power value to determine the final transmit power value for the PUSCH of the scheduled cell and transmit the PUSCH based on the final transmit power value. For the unscheduled cells, the final transmit power value may be determined based on the stored transmit power value when the next PUSCH transmission is indicated.

For example, the minimum applicable scheduling offset indicator field indicates the minimum applicable scheduling offset value corresponding to each cell, and the value may be applied to all cells.

Referring to (b) of FIG. 15, in the second method, the UE may apply the operation corresponding to the value indicated by the MC-DCI only to the scheduled cells and may not apply the operation corresponding to the value to the unscheduled cells. In other words, the UE may selectively apply the operation depending on whether the cell is scheduled. The UE may determine whether cells are scheduled based on the acquired FDRA field value and invalid association (1510). The UE may apply an operation corresponding to the value indicated by the MC-DCI field to the scheduled cells, and may not apply an operation corresponding to the value indicated by the MC-DCI field to the unscheduled cells (1511).

For example, when the BWP indicator field is indicated as a specific value, the UE may change the BWP of the scheduled cell to the active BWP corresponding to the indicated value. However, the UE may not change the BWP of the unscheduled cells to the active BWP corresponding to the indicated value.

For example, the transmit power value indicated in the TPC command for scheduled PUSCH field may be stored (only) for the scheduled cell. In addition, the UE may use the indicated transmit power value to determine the final transmit power value for the PUSCH of the scheduled cell and transmit the PUSCH based on the final transmit power value. For the unscheduled cells, the UE may not apply the transmit power value indicated by the MC-DCI.

For example, the minimum applicable scheduling offset indicator field indicates the minimum applicable scheduling offset value corresponding to each cell, and the value may be applied to the scheduled cell. That is, the UE may ignore the minimum applicable scheduling offset value for the unscheduled cells.

Referring to (c) of FIG. 15, in the third method, the UE may determine whether to follow the above-described first or second method for each field. For example, the UE may follow the first method for the first field included in the MC-DCI, and the second method for the second field. The base station may configure the UE regarding which method to follow. For example, which method is to be applied for each field may be configured by the higher layer signaling, the MAC CE, the DCI, etc.

The UE may determine whether cells are scheduled based on the acquired FDRA field value and invalid association (1510). The MC-DCI may include multiple fields, and for each field, it may be determined whether the UE may 1) apply the operation corresponding to the field value to all cells or 2) apply the operation corresponding to the field value only to the scheduled cells. Based on the determination, the UE may, with respect to each field, 1) apply the operation corresponding to the field value to all cells or 2) apply the operation corresponding to the field value only to the scheduled cells.

For example, the BWP indication field may follow the first method, and the TPC command for scheduled PUSCH field may follow the second method. That is, the BWP indication field may be applied to all cells, while the TPC command for scheduled PUSCH field may be applied only to the scheduled cells. In the description of Embodiment 3 described above, as the first to third methods, a method applying a single field to a plurality of cells was described as an example. However, one field may be applied to only one cell. In this case, a method for determining one cell may be required. For example, the one cell may be the cell with the lowest index among the cells. For example, the one cell may be the scheduled cell determined according to Embodiments 1 or 2 described above, or the unscheduled cell. Accordingly, the UE may determine the one cell based on the lowest cell index among the scheduled cells, or may determine the one cell based on a cell with the lowest cell index among all cells.

FIG. 16 is a diagram illustrating a structure of a UE in the wireless communication system according to an embodiment of the present disclosure.

Referring to FIG. 16, the UE may include a transceiver, which refers to a terminal receiver 1600 and a terminal transmitter 1610, a memory (not illustrated), and a terminal processor 1605 or a terminal controller (or processor). According to the communication method of the UE described above, the transceivers 1600 and 1610, the memory, and the terminal processor 1605 of the UE may operate. However, the components of the UE are not limited to the examples described above. For example, the UE may include more or fewer components than the components described above. In addition, the transceiver, the memory, and the processor may also be implemented in the form of a single chip.

The transceiver may transmit and receive a signal to and from a base station. Here, the signal may include control information and data. To this end, the transceiver may include an RF transmitter that up-converts the frequency of the transmitted signal and amplifies the transmitted signal, an RF receiver that performs low-noise amplification on the received signal and down-converts the frequency of the received signal, etc. However, this is only one example of the transceiver, and the components of the transceiver are not limited to the RF transmitter and the RF receiver.

In addition, the transceiver may receive a signal via a wireless channel, output the signal to the processor, and transmit the signal output from the processor via the wireless channel.

The memory may store programs and data necessary for the operation of the UE. In addition, the memory may store the control information or data included in the signal transmitted and received by the UE. The memory may be configured as storage media, such as a ROM, a RAM, a hard disk, a CD-ROM, or a DVD, or a combination of such storage media. Furthermore, the number of memories may be plural.

In addition, the processor may control a series of processes so that the UE may operate according to the embodiments described above. For example, the processor may receive a DCI composed of two layers and control the components of the UE to simultaneously receive a plurality of PDSCHs. There may be a plurality of processors, and the processors may perform component control operations of the UE by executing programs stored in the memory.

FIG. 17 is a diagram illustrating a structure of a base station in the wireless communication system according to an embodiment of the present disclosure.

Referring to FIG. 17, the base station may include a transceiver, which refers to a base station receiver 1730 and a base station transmitter 1710, a memory (not illustrated), and a base station processor 1705 or a base station controller (or processor). According to the communication method of the base station described above, the transceivers 1700 and 1710, the memory, and the base station processor 1705 of the base station may operate. However, the components of the base station are not limited to the examples described above. For example, the base station may include more or fewer components than the components described above. In addition, the transceiver, the memory, and the processor may also be implemented in the form of a single chip.

The transceiver may transmit and receive a signal to and from a UE. Here, the signal may include control information and data. To this end, the transceiver may include an RF transmitter that up-converts the frequency of the transmitted signal and amplifies the transmitted signal, an RF receiver that performs low-noise amplification on the received signal and down-converts the frequency of the received signal, etc. However, this is only one example of the transceiver, and the components of the transceiver are not limited to the RF transmitter and the RF receiver.

In addition, the transceiver may receive a signal via a wireless channel, output the signal to the processor, and transmit the signal output from the processor via the wireless channel.

The memory may store programs and data necessary for the operation of the base station. In addition, the memory may store the control information or data included in the signal transmitted and received by the base station. The memory may be configured as storage media, such as a ROM, a RAM, a hard disk, a CD-ROM, or a DVD, or a combination of such storage media. Furthermore, the number of memories may be plural.

The processor may control a series of processes so that the base station may operate according to the embodiments of the present disclosure described above. For example, the processor may control each component of the base station to configure and transmit two layers of DCIs including allocation information for a plurality of PDSCHs. The number of processors may be plural, and the processor may execute the programs stored in the memory to perform component control operations of the base station.

The methods according to the embodiments described in the claims or specifications of the present disclosure may be implemented in the form of hardware, software, or a combination of hardware and software.

When implemented in software, a computer-readable storage medium storing one or more programs (software modules) may be provided. One or more programs stored in the computer-readable storage medium are configured to be executable by one or more processors in an electronic device. One or more programs include instructions for causing an electronic device to execute methods according to embodiments described in a claim or specification of the present disclosure.

Such programs (software modules, software) may be stored in a random access memory, a non-volatile memory including flash memory, a read only memory (ROM), an electrically erasable programmable read only memory (EEPROM), a magnetic disc storage device, a compact disc-ROM (CD-ROM), digital versatile Discs (DVDs), any other form of optical storage device, and a magnetic cassette. Alternatively, it may be stored in a memory composed of a combination of some or all thereof. In addition, each composed memory may be included in plural.

In addition, the program may be stored in an attachable storage device that may accessed through a communication network such as the Internet, the Intranet, a local area network (LAN), wide LAN (WLAN), or a storage area network (SAN), or a combination thereof. Such a storage device may be connected to a device implementing an embodiment of the present disclosure through an external port. In addition, a separate storage device on the communication network may be connected to the device implementing the embodiment of the present disclosure.

In the specific embodiments of the present disclosure described above, components included in the invention are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the component may be configured in plural.

Meanwhile, the embodiments of the present disclosure disclosed in this specification and drawings are merely specific examples presented to easily describe the technical contents of the present disclosure and to help understanding of the present disclosure, and are not intended to limit the scope of the present disclosure. That is, it is obvious to a person having ordinary skill in the art to which the present disclosure pertains that other modifications based on the technical idea of the present disclosure are possible. In addition, each embodiment may be combined with each other and operated as needed. For example, portions of an embodiment and another embodiment of the present disclosure may be combined with each other to operate a base station and a UE. For example, portions of the first and second embodiments of the present disclosure may be combined with each other to operate the base station and the UE. In addition, while the embodiments have been presented based on an FDD LTE system, other modifications based on the technical ideas of the embodiments may also be practiced in other systems, such as a TDD LTE system, 5G, or NR system.

Meanwhile, the order of description in the drawings describing the method of the present disclosure does not necessarily correspond to the order of execution, and the order of precedence may be changed or executed in parallel.

Alternatively, the drawings describing the method of the present disclosure may omit some components and include only some components, without departing from the essence of the present disclosure.

In addition, the method of the present disclosure may be executed by combining some or all of the contents included in each embodiment, without departing from the essence of the present disclosure.

Various embodiments of the present disclosure have been described above. The foregoing description of the present disclosure is for illustrative purposes, and the embodiments of the present disclosure are not limited to the disclosed embodiments. It will be understood by those of ordinary skill in the art to which the present disclosure pertains that various modifications can be made in other specific forms without departing from the technical idea or essential features of the present disclosure. It should be interpreted that the scope of the present disclosure is defined by the following claims rather than the detailed description and all modifications or alterations deduced from the meaning, the scope, and equivalences of the claims are included in the scope of the present disclosure.

## Claims

**1.** A method performed by a user equipment (UE) in a communication system, the method comprising:

receiving, via higher layer signaling, information associated with a scheduled cell set;
receiving downlink control information (DCI), wherein the DCI includes a bandwidth part (BWP) indicator field and a frequency domain resource assignment (FDRA) field;
identifying, based on the FDRA field, a serving cell to be applied to the BWP indicator field among a plurality of serving cells included in the scheduled cell set; and
applying the BWP indicator field to the serving cell.

**2.** The method of claim 1, wherein the FDRA field includes a plurality of fields associated with the plurality of serving cells,

wherein in case that a resource allocation type is set to type-0, the serving cell is associated with a field in which one or more bits are ’1’ among the plurality of fields,
wherein in case that the resource allocation type is set to type-1, the serving cell is associated with a field in which one or more bits are ’0’ among the plurality of fields,
wherein in case that the resource allocation type is set to type-2 and a subcarrier spacing (SCS) configuration of the serving cell is 0, the serving cell is associated with a field in which one or more bits are ’0’ among the plurality of fields, and
wherein in case that the resource allocation type is set to type-2 and the SCS configuration of the serving cell is 1, the serving cell is associated with a field in which one or more bits are ’1’ among the plurality of fields.

**3.** The method of claim 1, wherein the DCI further includes a scheduled cell indicator,

wherein a table corresponding to the scheduled cell indicator is configured based on information associated with the scheduled cell set, and each row of the table includes a plurality of scheduled cells, and
wherein the plurality of serving cells are a plurality of scheduled cells included in a row corresponding to an index indicated by the scheduled cell indicator.

**4.** The method of claim 1, wherein the BWP indicator field is not applied to remaining serving cells, excluding the one or more serving cells from among the plurality of serving cells.

**5.** A user equipment (UE) in a communication system, the UE comprising:

a transceiver; and
a processor coupled with the transceiver, wherein the processor is configured to:

receive, via higher layer signaling, information associated with a scheduled cell set;
receive downlink control information (DCI), wherein the DCI includes a bandwidth part (BWP) indicator field and a frequency domain resource assignment (FDRA) field;
identify, based on the FDRA field, a serving cell to be applied to the BWP indicator field among a plurality of serving cells included in the scheduled cell set; and
apply the BWP indicator field to the serving cell.

**6.** The UE of claim 5, wherein the FDRA field includes a plurality of fields associated with the plurality of serving cells,

wherein in case that a resource allocation type is set to type-0, the serving cell is associated with a field in which one or more bits are ’1’ among the plurality of fields,
wherein in case that the resource allocation type is set to type-1, the serving cell is associated with a field in which one or more bits are ’0’ among the plurality of fields,
wherein in case that the resource allocation type is set to type-2 and a subcarrier spacing (SCS) configuration of the serving cell is 0, the serving cell is associated with a field in which one or more bits are '0' among the plurality of fields, and
wherein in case that the resource allocation type is set to type-2 and the SCS configuration of the serving cell is 1, the serving cell is associated with a field in which one or more bits are '1' among the plurality of fields.

**7.** The UE of claim 5, wherein the DCI further includes a scheduled cell indicator,

wherein a table corresponding to the scheduled cell indicator is configured based on information associated with the scheduled cell set, and each row of the table includes a plurality of scheduled cells, and
wherein the plurality of serving cells are a plurality of scheduled cells included in a row corresponding to an index indicated by the scheduled cell indicator.

**8.** The UE of claim 5, wherein the BWP indicator field is not applied to remaining serving cells, excluding the one or more serving cells from among the plurality of serving cells.

**9.** A method performed by a base station in a communication system, the method comprising:

transmitting, via higher layer signaling, information associated with a scheduled cell set; and
transmitting downlink control information (DCI),
wherein the DCI includes a bandwidth part (BWP) indicator field and a frequency domain resource assignment (FDRA) field, and
wherein the BWP indicator field is for a serving cell associated with the FDRA field among a plurality of serving cells included in the scheduled cell set.

**10.** The method of claim 9, wherein the FDRA field includes a plurality of fields associated with the plurality of serving cells,

wherein in case that a resource allocation type is set to type-0, the serving cell is associated with a field in which one or more bits are '1' among the plurality of fields,
wherein in case that the resource allocation type is set to type-1, the serving cell is associated with a field in which one or more bits are '0' among the plurality of fields,
wherein in case that the resource allocation type is set to type-2 and a subcarrier spacing (SCS) configuration of the serving cell is 0, the serving cell is associated with a field in which one or more bits are '0' among the plurality of fields, and
wherein in case that the resource allocation type is set to type-2 and the SCS configuration of the serving cell is 1, the serving cell is associated with a field in which one or more bits are '1' among the plurality of fields.

**11.** The method of claim 9, wherein the DCI further includes a scheduled cell indicator,

wherein a table corresponding to the scheduled cell indicator is configured based on information associated with the scheduled cell set, and each row of the table includes a plurality of scheduled cells, and
wherein the plurality of serving cells are a plurality of scheduled cells included in a row corresponding to an index indicated by the scheduled cell indicator.

**12.** The method of claim 9, wherein the BWP indicator field is not associated with remaining serving cells, excluding the one or more serving cells from among the plurality of serving cells.

**13.** A base station in a communication system, the base station comprising:

a transceiver; and
a processor coupled with the transceiver, wherein the processor is configured to:

transmit, via higher layer signaling, information associated with a scheduled cell set; and
transmit downlink control information (DCI),
wherein the DCI includes a bandwidth part (BWP) indicator field and a frequency domain resource assignment (FDRA) field, and
wherein the BWP indicator field is for a serving cell associated with the FDRA field among a plurality of serving cells included in the scheduled cell set.

**14.** The base station of claim 13, wherein the FDRA field includes a plurality of fields associated with the plurality of serving cells,

wherein in case that a resource allocation type is set to type-0, the serving cell is associated with a field in which one or more bits are '1' among the plurality of fields,
wherein in case that the resource allocation type is set to type-1, the serving cell is associated with a field in which one or more bits are '0' among the plurality of fields,
wherein in case that the resource allocation type is set to type-2 and a subcarrier spacing (SCS) configuration of the serving cell is 0, the serving cell is associated with a field in which one or more bits are '0' among the plurality of fields, and
wherein in case that the resource allocation type is set to type-2 and the SCS configuration of the serving cell is 1, the serving cell is associated with a field in which one or more bits are '1' among the plurality of fields.

**15.** The base station of claim 13, wherein the DCI further includes a scheduled cell indicator,

wherein a table corresponding to the scheduled cell indicator is configured based on information associated with the scheduled cell set, and each row of the table includes a plurality of scheduled cells, and
wherein the plurality of serving cells are a plurality of scheduled cells included in a row corresponding to an index indicated by the scheduled cell indicator.

FIG. 1

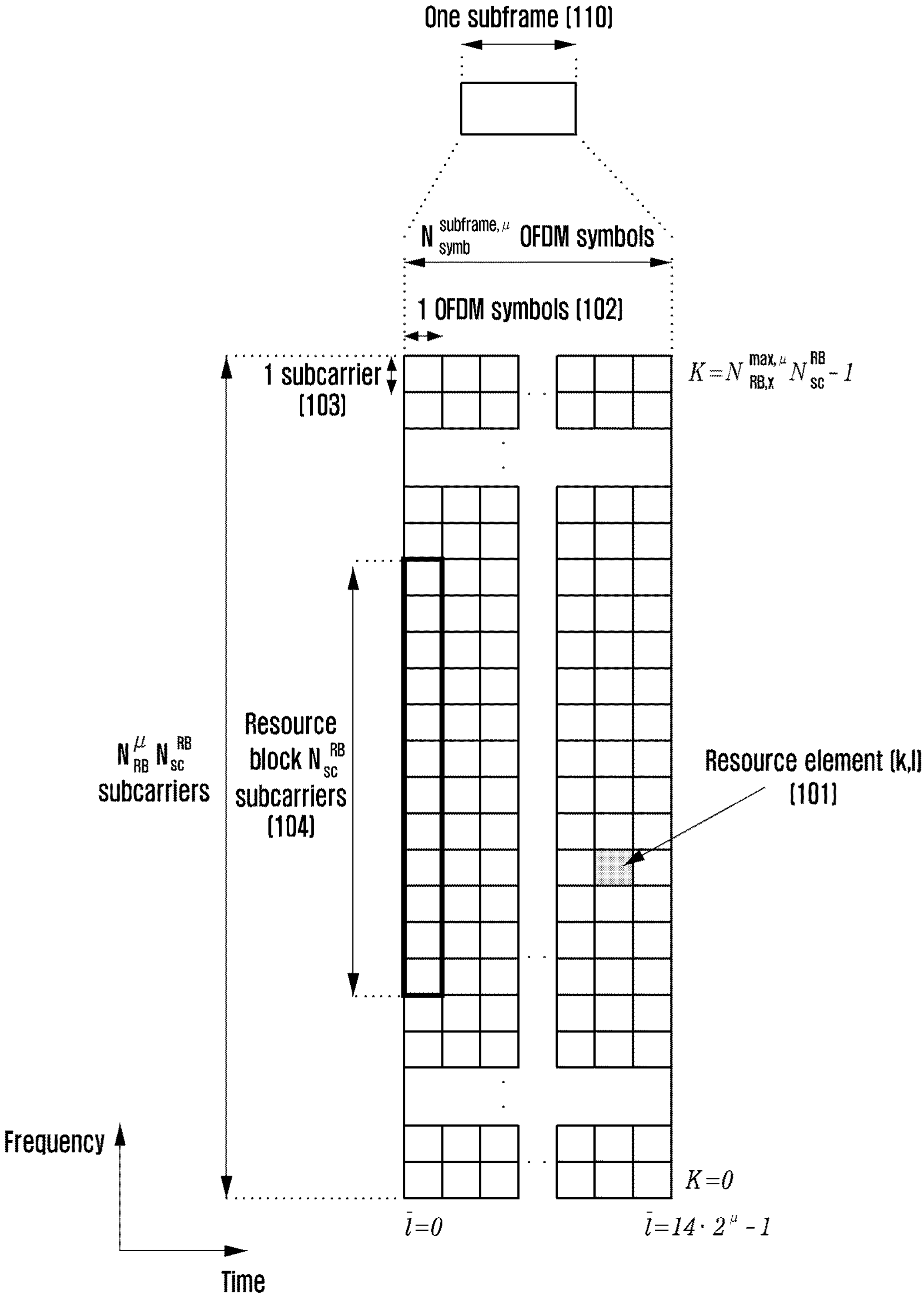

One subframe (110)
$N_{symb}^{subframe,\mu}$ OFDM symbols
1 OFDM symbols (102)
1 subcarrier (103)
$K=N_{RB,x}^{max,\mu}N_{sc}^{RB}-1$
$N_{RB}^{\mu}N_{sc}^{RB}$ subcarriers
Resource block $N_{sc}^{RB}$ subcarriers (104)
Resource element (k,l) (101)
Frequency
$K=0$
$\bar{l}=0$
$\bar{l}=14\cdot2^{\mu}-1$
Time

FIG. 2

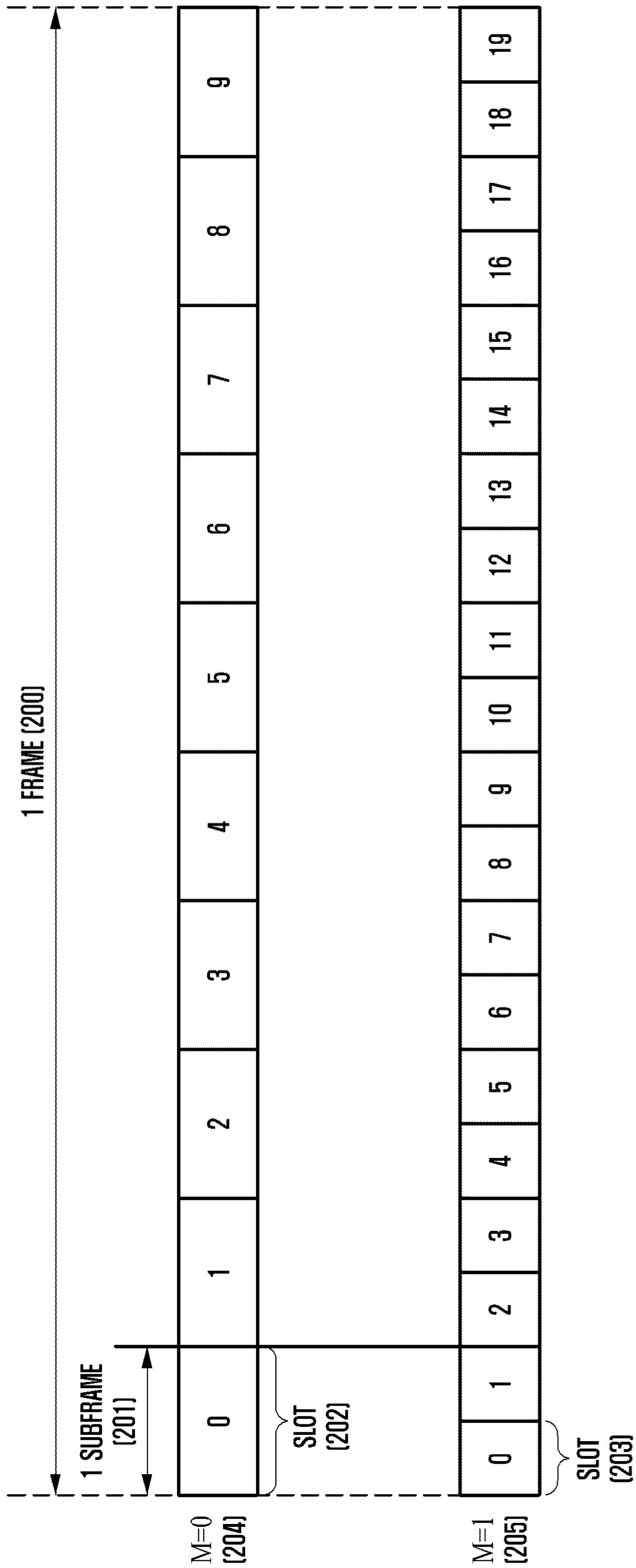
1 FRAME (200)
1 SUBFRAME (201)
SLOT (202)
SLOT (203)
M=0 (204)
M=1 (205)
0
1
2
3
4
5
6
7
8
9
10
11
12
13
14
15
16
17
18
19

FIG. 3

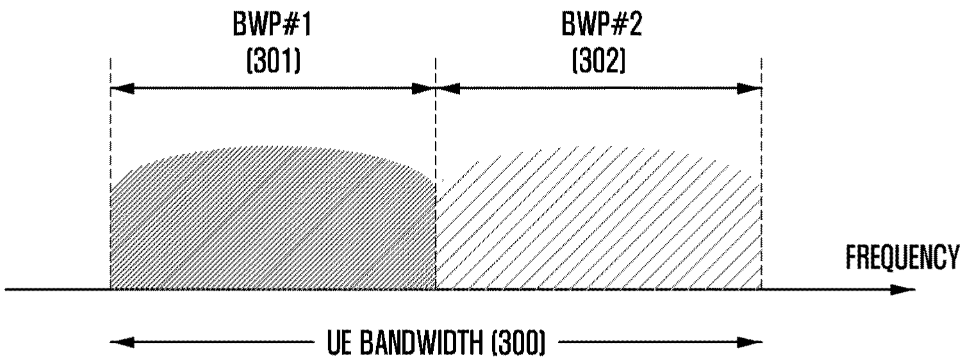

FIG. 4

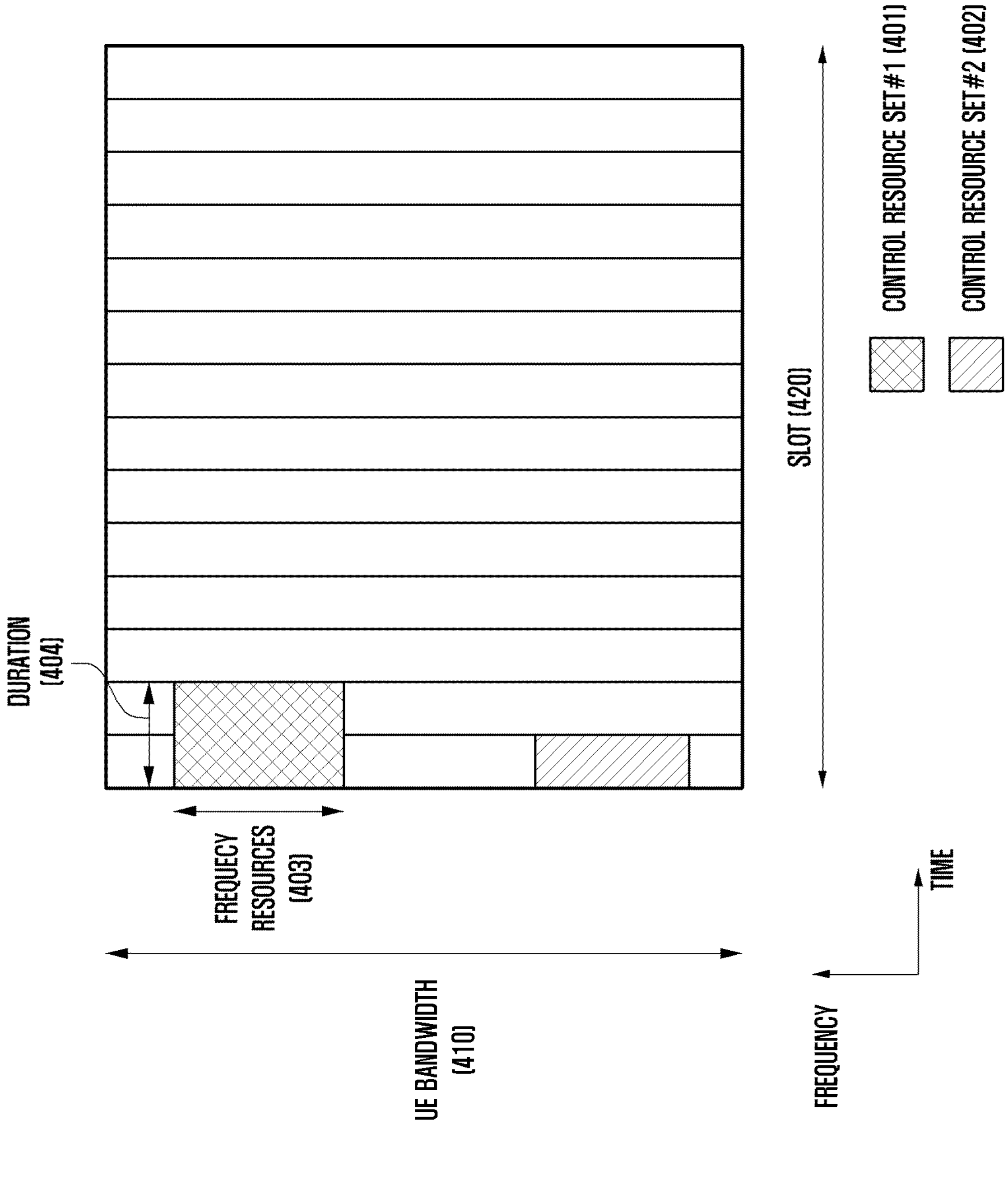
DURATION
(404)
FREQUECY
RESOURCES
(403)
UE BANDWIDTH
(410)
SLOT (420)
CONTROL RESOURCE SET#1 (401)
CONTROL RESOURCE SET#2 (402)
TIME
FREQUENCY

FIG. 5

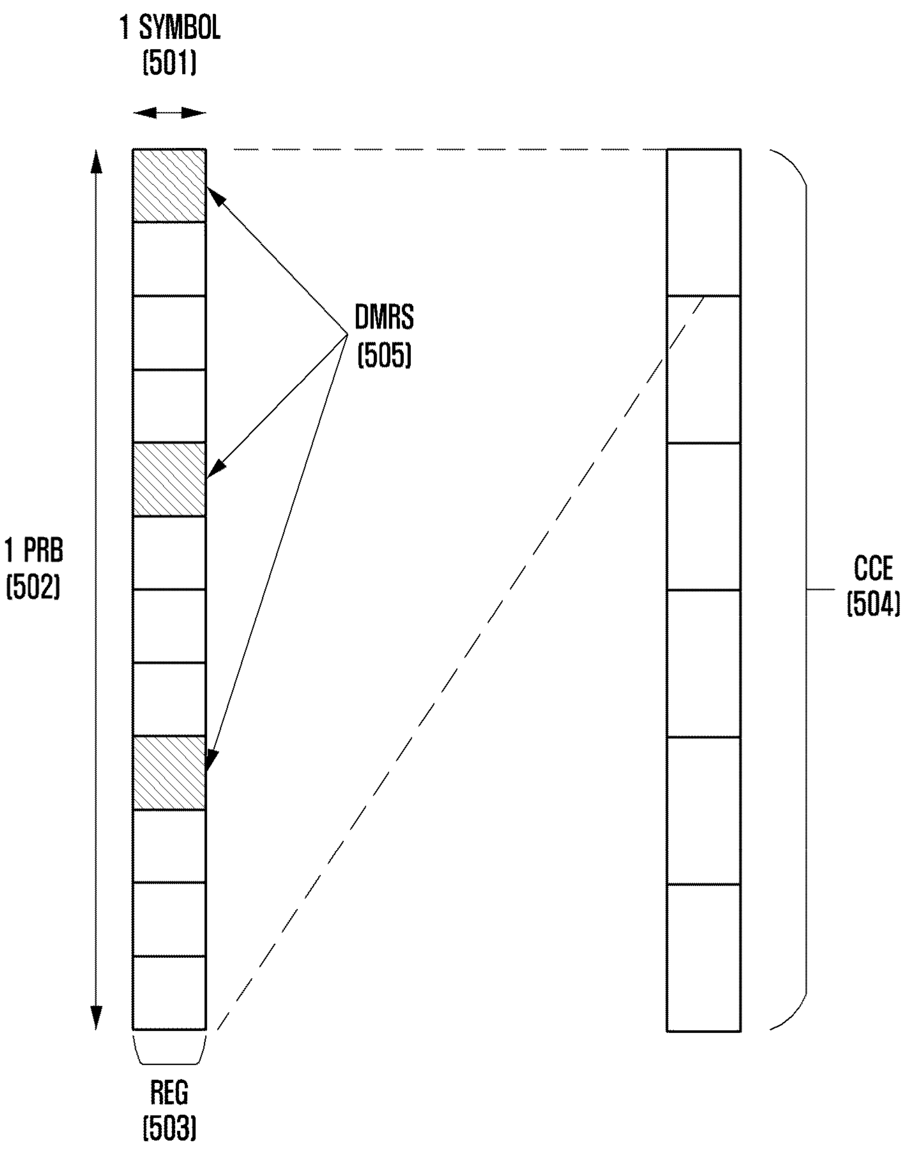

FIG. 6

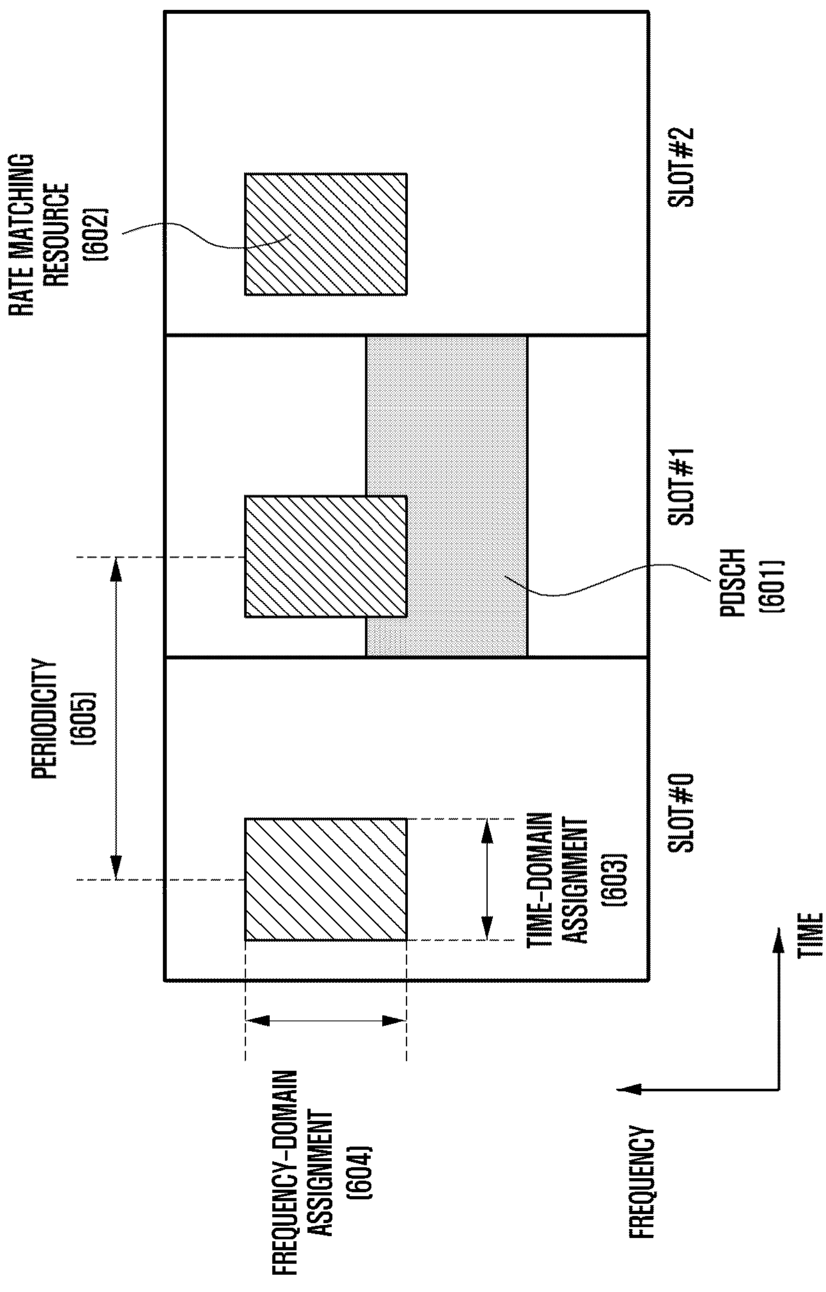
RATE MATCHING RESOURCE (602)
PERIODICITY (605)
TIME-DOMAIN ASSIGNMENT (603)
FREQUENCY-DOMAIN ASSIGNMENT (604)
PDSCH (601)
SLOT#0
SLOT#1
SLOT#2
FREQUENCY
TIME

FIG. 7

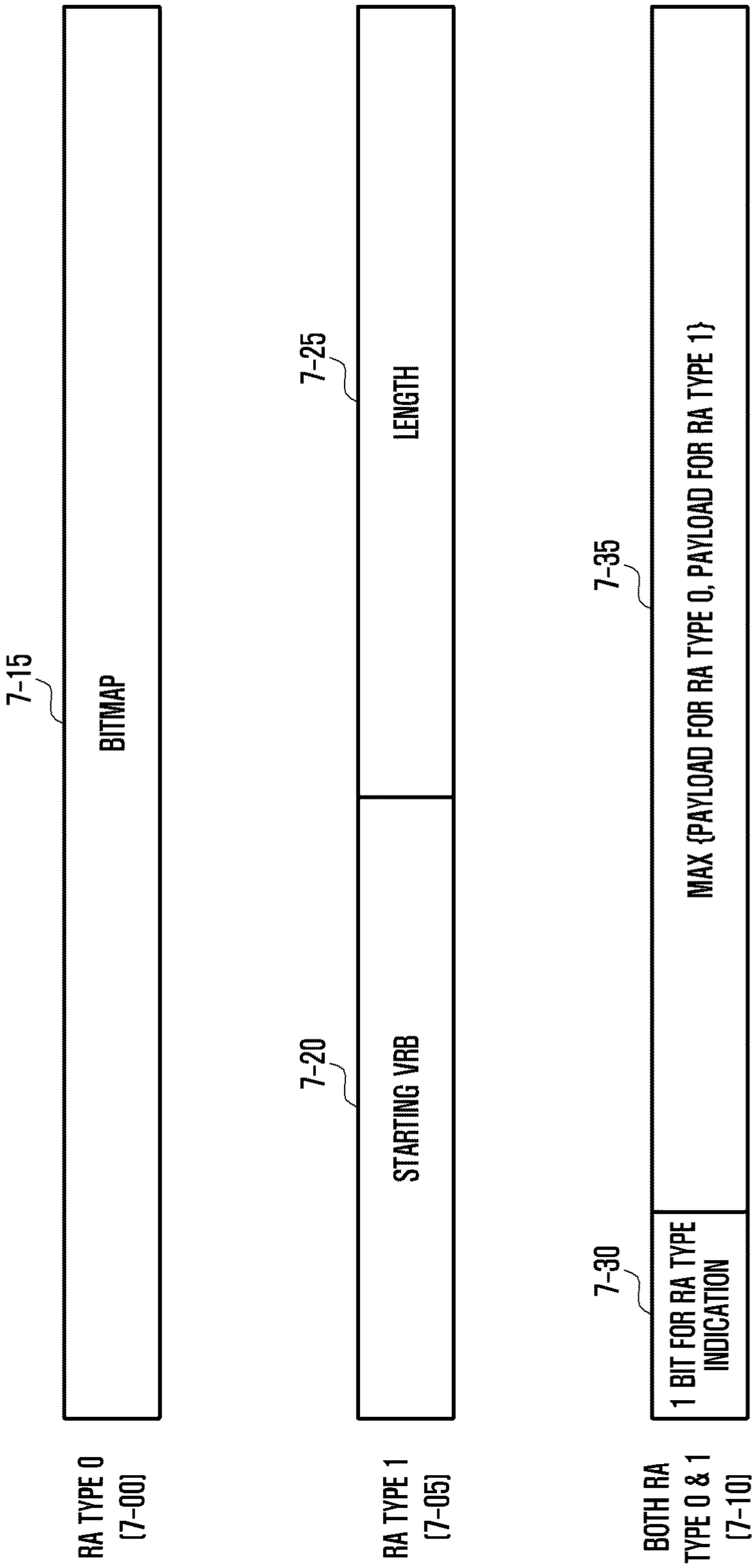
RA TYPE 0
(7-00)
BITMAP
7-15
RA TYPE 1
(7-05)
STARTING VRB
7-20
LENGTH
7-25
BOTH RA
TYPE 0 & 1
(7-10)
1 BIT FOR RA TYPE
INDICATION
7-30
MAX {PAYLOAD FOR RA TYPE 0, PAYLOAD FOR RA TYPE 1}
7-35

FIG. 8

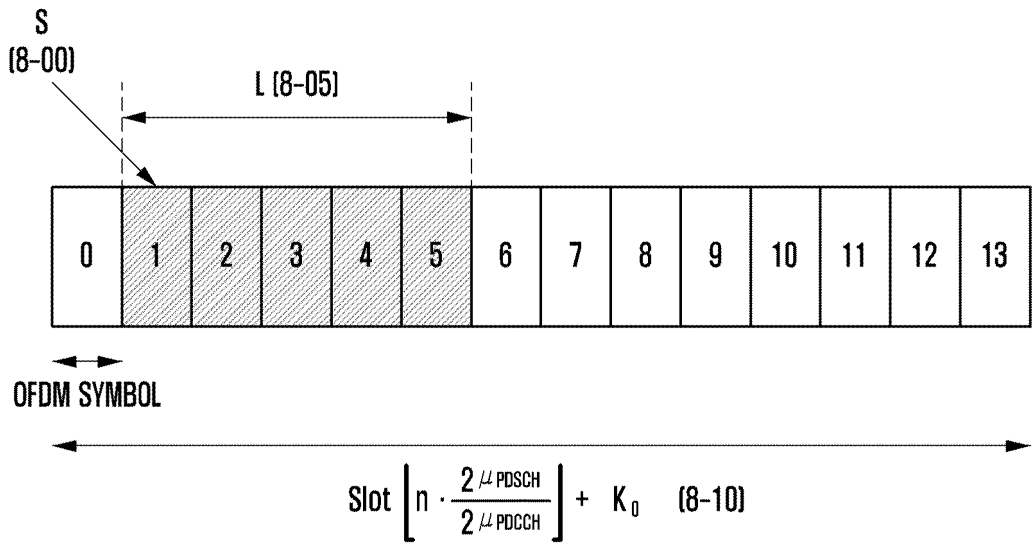
S
(8-00)
L (8-05)
0
1
2
3
4
5
6
7
8
9
10
11
12
13
OFDM SYMBOL
Slot $\left\lfloor n \cdot \frac{2^{\mu_{PDSCH}}}{2^{\mu_{PDCCH}}} \right\rfloor + K_0$ (8-10)

FIG. 9

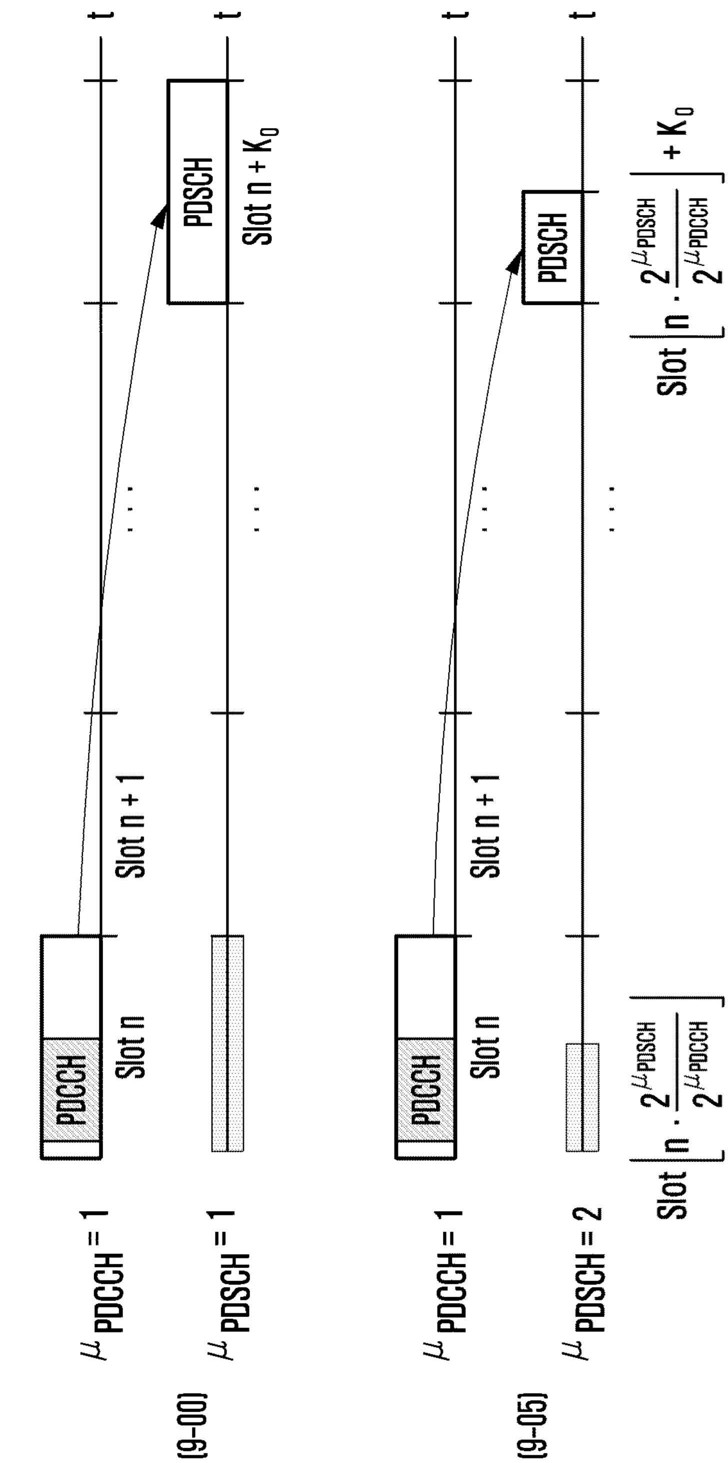
(9-00)
$\mu_{PDCCH} = 1$
$\mu_{PDSCH} = 1$
PDCCH
Slot n
Slot n + 1
PDSCH
Slot n + $K_0$
t
(9-05)
$\mu_{PDCCH} = 1$
$\mu_{PDSCH} = 2$
PDCCH
Slot n
Slot n + 1
PDSCH
Slot $\left\lfloor n \cdot \frac{2^{\mu_{PDSCH}}}{2^{\mu_{PDCCH}}} \right\rfloor$
Slot $\left\lfloor n \cdot \frac{2^{\mu_{PDSCH}}}{2^{\mu_{PDCCH}}} \right\rfloor + K_0$
t

FIG. 10

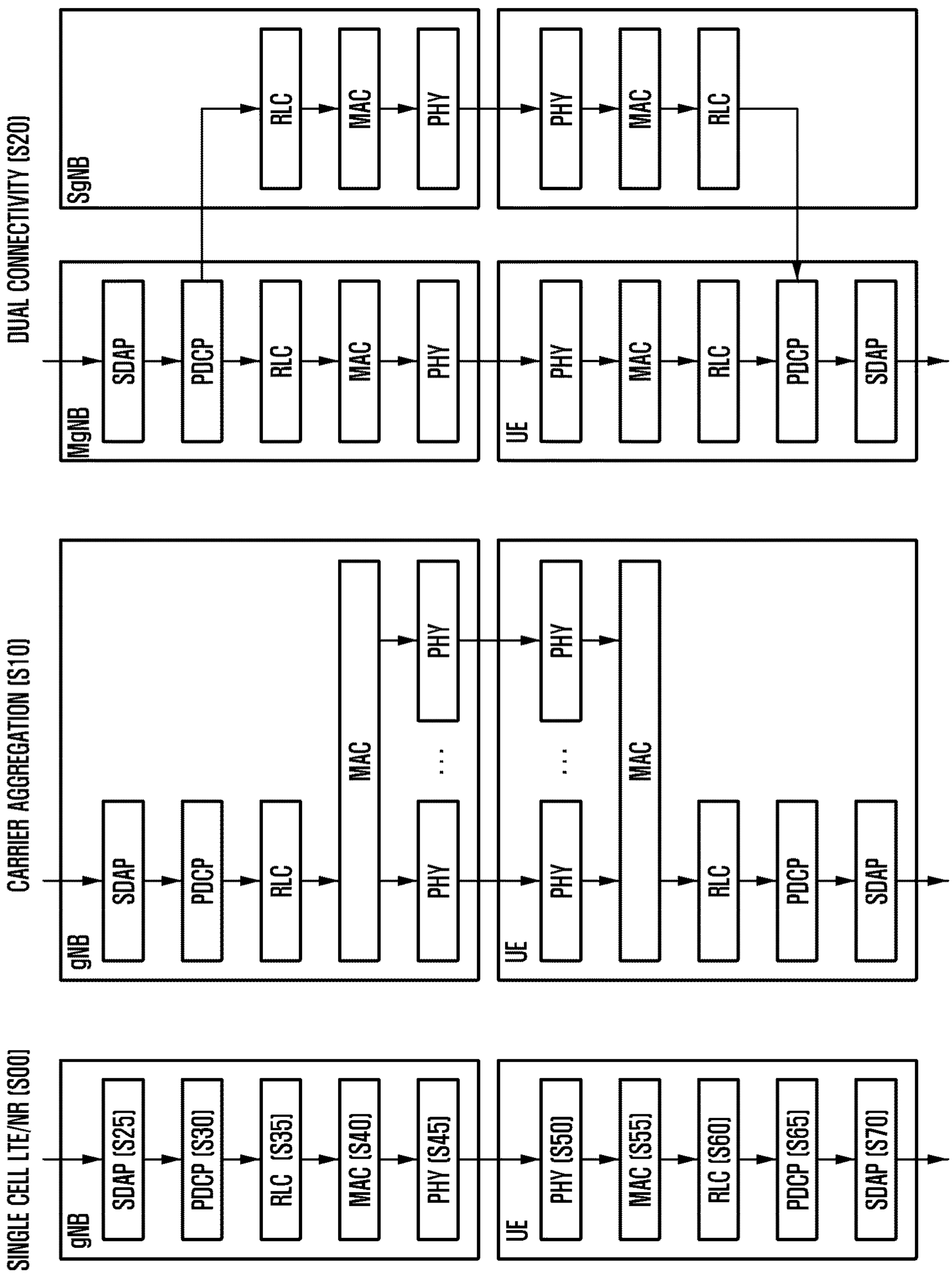
SINGLE CELL LTE/NR (S00)
gNB
SDAP (S25)
PDCP (S30)
RLC (S35)
MAC (S40)
PHY (S45)
UE
PHY (S50)
MAC (S55)
RLC (S60)
PDCP (S65)
SDAP (S70)
CARRIER AGGREGATION (S10)
gNB
SDAP
PDCP
RLC
MAC
PHY
...
PHY
UE
PHY
...
PHY
MAC
RLC
PDCP
SDAP
DUAL CONNECTIVITY (S20)
MgNB
SDAP
PDCP
RLC
MAC
PHY
SgNB
RLC
MAC
PHY
UE
PHY
MAC
RLC
PDCP
SDAP
PHY
MAC
RLC

FIG. 11

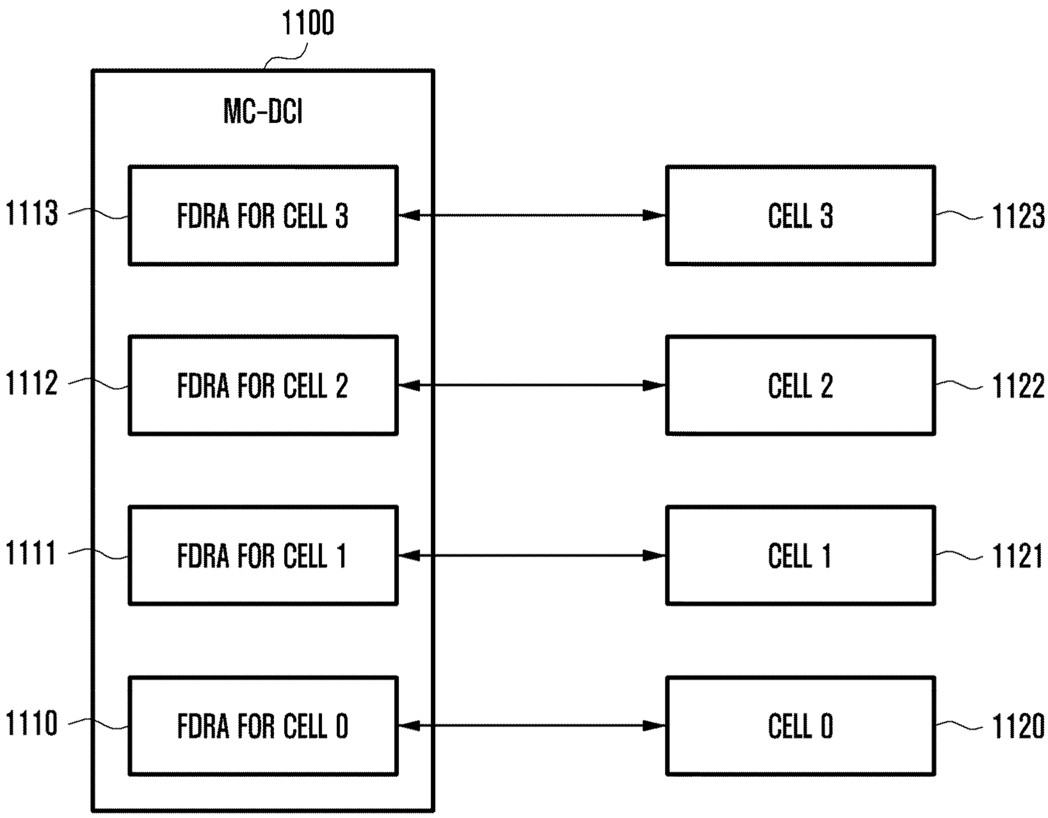
1100
MC-DCI
1113
FDRA FOR CELL 3
CELL 3
1123
1112
FDRA FOR CELL 2
CELL 2
1122
1111
FDRA FOR CELL 1
CELL 1
1121
1110
FDRA FOR CELL 0
CELL 0
1120

FIG. 12

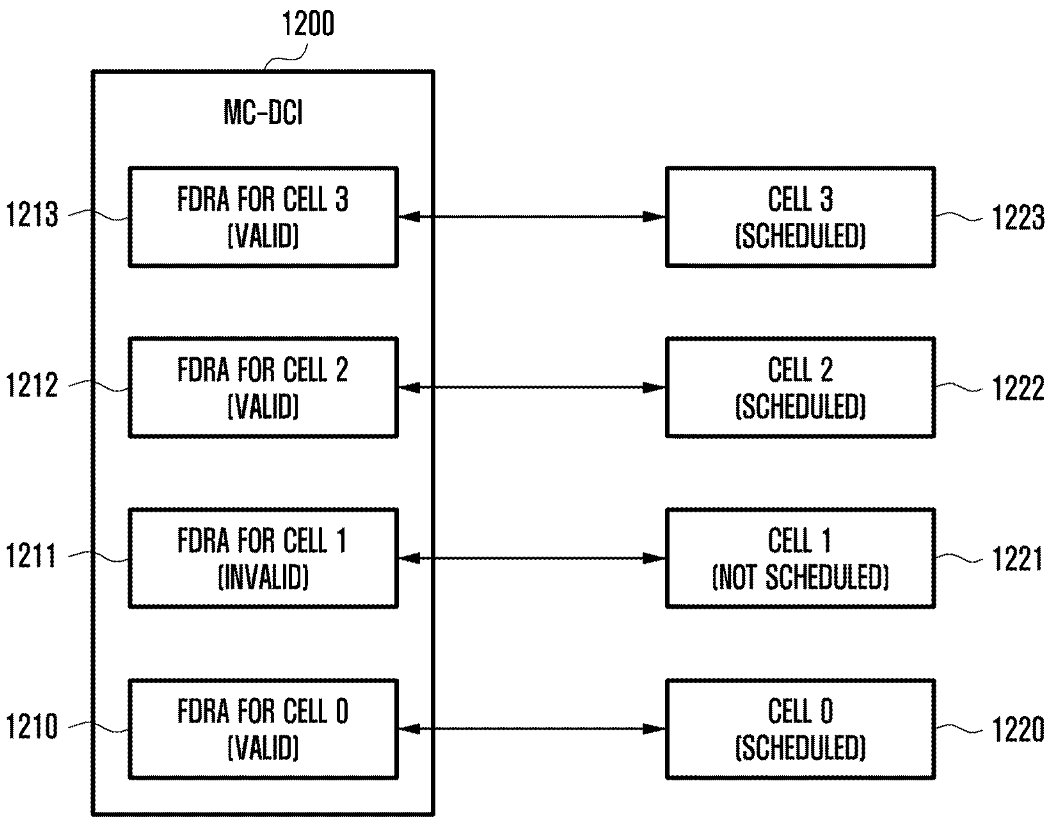
1200
MC-DCI
1213
FDRA FOR CELL 3
(VALID)
1212
FDRA FOR CELL 2
(VALID)
1211
FDRA FOR CELL 1
(INVALID)
1210
FDRA FOR CELL 0
(VALID)
CELL 3
(SCHEDULED)
1223
CELL 2
(SCHEDULED)
1222
CELL 1
(NOT SCHEDULED)
1221
CELL 0
(SCHEDULED)
1220

FIG. 13

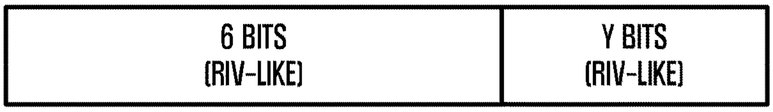


(A) FDRA TYPE-2 (15KHZ)

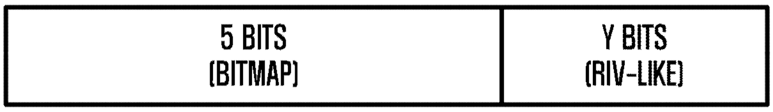


(B) FDRA TYPE-2 (30KHZ)

FIG. 14

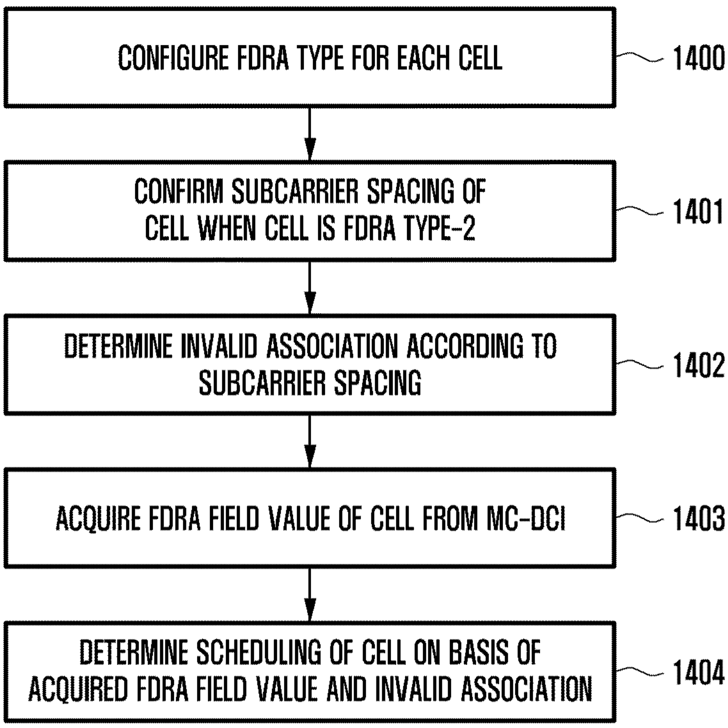
CONFIGURE FDRA TYPE FOR EACH CELL
1400
CONFIRM SUBCARRIER SPACING OF CELL WHEN CELL IS FDRA TYPE-2
1401
DETERMINE INVALID ASSOCIATION ACCORDING TO SUBCARRIER SPACING
1402
ACQUIRE FDRA FIELD VALUE OF CELL FROM MC-DCI
1403
DETERMINE SCHEDULING OF CELL ON BASIS OF ACQUIRED FDRA FIELD VALUE AND INVALID ASSOCIATION
1404

FIG. 15

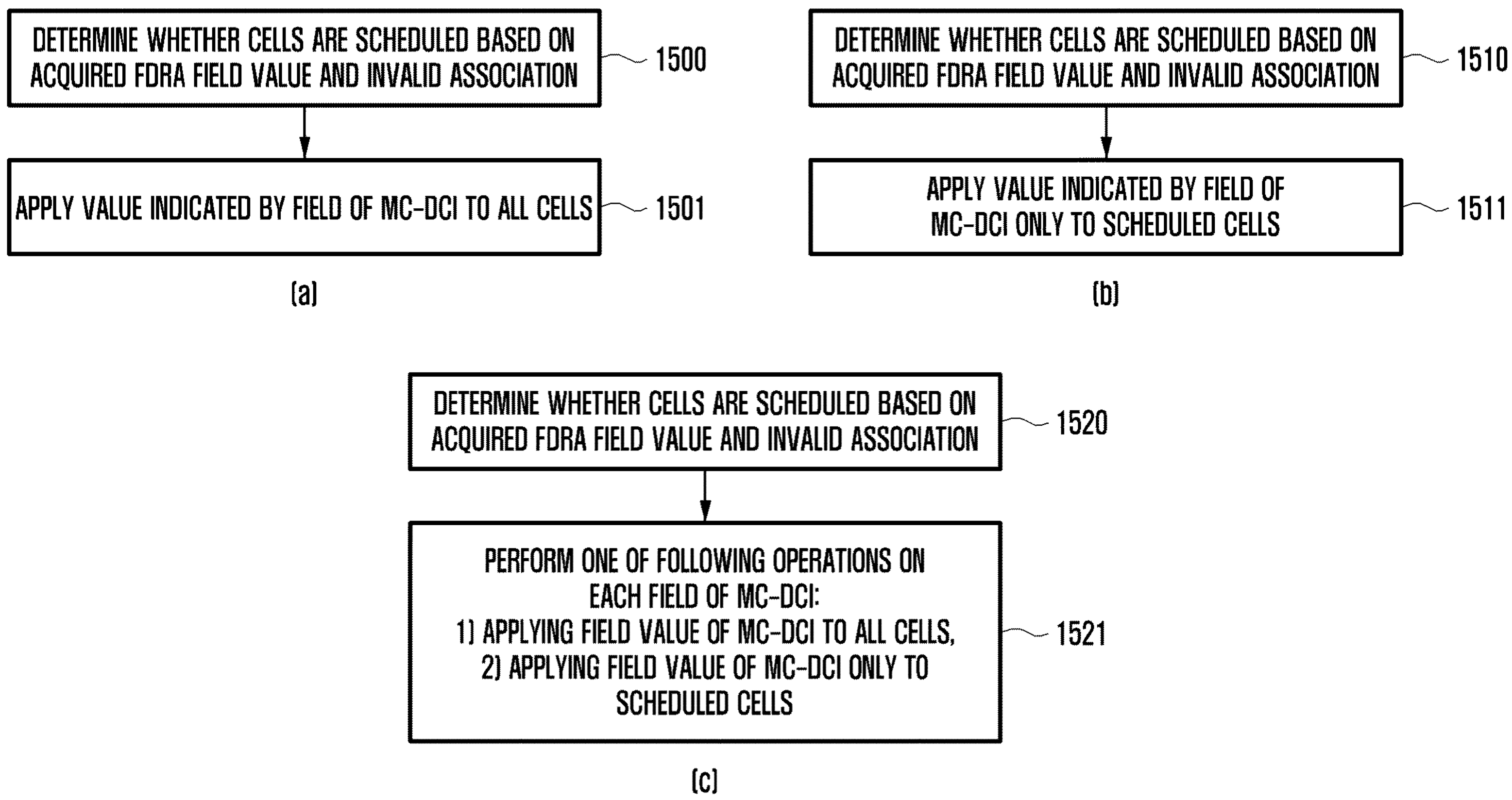
DETERMINE WHETHER CELLS ARE SCHEDULED BASED ON ACQUIRED FDRA FIELD VALUE AND INVALID ASSOCIATION
1500
APPLY VALUE INDICATED BY FIELD OF MC-DCI TO ALL CELLS
1501
(a)
DETERMINE WHETHER CELLS ARE SCHEDULED BASED ON ACQUIRED FDRA FIELD VALUE AND INVALID ASSOCIATION
1510
APPLY VALUE INDICATED BY FIELD OF MC-DCI ONLY TO SCHEDULED CELLS
1511
(b)
DETERMINE WHETHER CELLS ARE SCHEDULED BASED ON ACQUIRED FDRA FIELD VALUE AND INVALID ASSOCIATION
1520
PERFORM ONE OF FOLLOWING OPERATIONS ON EACH FIELD OF MC-DCI:
1) APPLYING FIELD VALUE OF MC-DCI TO ALL CELLS,
2) APPLYING FIELD VALUE OF MC-DCI ONLY TO SCHEDULED CELLS
1521
(c)

FIG. 16

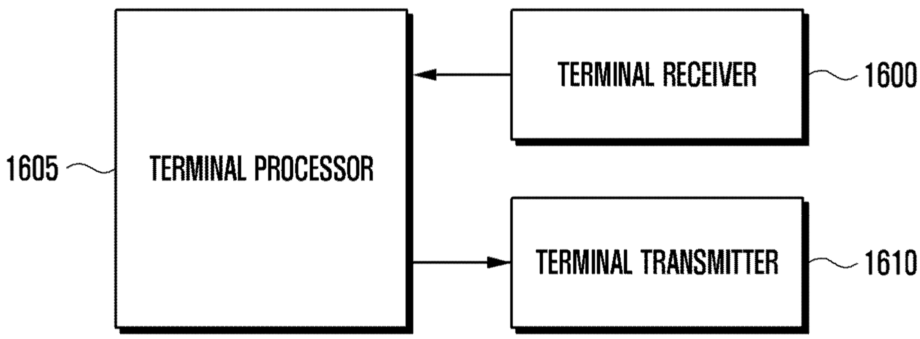
TERMINAL RECEIVER
1600
1605
TERMINAL PROCESSOR
TERMINAL TRANSMITTER
1610

FIG. 17

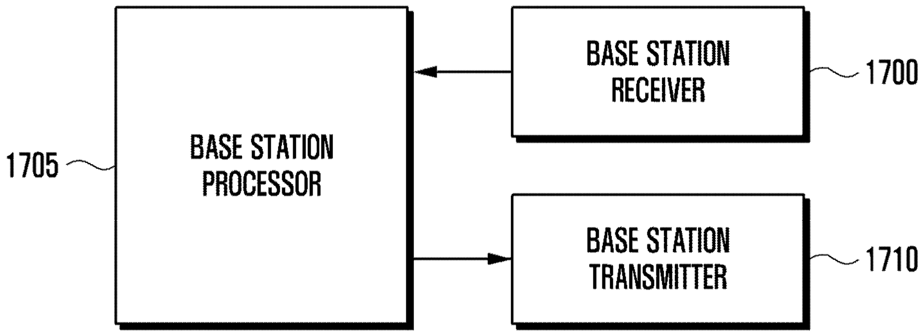
BASE STATION RECEIVER
1700
1705
BASE STATION PROCESSOR
BASE STATION TRANSMITTER
1710

**INTERNATIONAL SEARCH REPORT**

International application No. **PCT/KR2024/004470**

**A. CLASSIFICATION OF SUBJECT MATTER**

**H04W 72/232**(2023.01)i; **H04W 72/04**(2009.01)i; **H04W 72/0457**(2023.01)i; **H04W 72/12**(2009.01)i; **H04W 52/14**(2009.01)i; **H04W 52/32**(2009.01)i; **H04W 52/54**(2009.01)i; **H04L 27/26**(2006.01)i

According to International Patent Classification (IPC) or to both national classification and IPC

**B. FIELDS SEARCHED**

Minimum documentation searched (classification system followed by classification symbols)

H04W 72/232(2023.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: scheduled cell set, DCI, BWP indicator field, FDRA field, serving cell, scheduled cell indicator

**C. DOCUMENTS CONSIDERED TO BE RELEVANT**

| Category* | Citation of document, with indication, where appropriate, of the relevant passages | Relevant to claim No. |
|---|---|---|
| X<br>A | CATT. Discussion on multi-cell PUSCH/PDSCH scheduling with a single DCI. R1-2300696, 3GPP TSG RAN WG1 #112. Athens, Greece. 17 February 2023.<br>See sections 2-5.2. | 1,3-5,7-9,11-13,15<br>2,6,10,14 |
| A | CHINA TELECOM. Remaining issues on multi-cell scheduling with a single DCI. R1-2300725, 3GPP TSG RAN WG1 #112. Athens, Greece. 17 February 2023.<br>See sections 2-3. | 1-15 |
| A | OPPO. Discussion on multi-cell PUSCH/PDSCH scheduling with a single DCI. R1-2300289, 3GPP TSG RAN WG1 #112. Athens, Greece. 17 February 2023.<br>See sections 2-3. | 1-15 |
| A | VIVO. Discussion on multi-cell scheduling. R1-2300469, 3GPP TSG RAN WG1 #112. Athens, Greece. 17 February 2023.<br>See sections 2-3. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2024** | **01 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/004470**

**C. DOCUMENTS CONSIDERED TO BE RELEVANT**

| Category* | Citation of document, with indication, where appropriate, of the relevant passages | Relevant to claim No. |
|---|---|---|
| A | US 2022-0312444 A1 (APPLE INC.) 29 September 2022 (2022-09-29)<br>See paragraphs [0056]-[0062]; and claim 1. | 1-15 |

Form PCT/ISA/210 (second sheet) (July 2022)

**INTERNATIONAL SEARCH REPORT**
**Information on patent family members**

International application No.
**PCT/KR2024/004470**

| Patent document cited in search report | Publication date (day/month/year) | Patent family member(s) | Publication date (day/month/year) |
| --- | --- | --- | --- |
| US 2022-0312444 A1 | 29 September 2022 | CN 115606283 A | 13 January 2023 |
| | | EP 4151001 A1 | 22 March 2023 |
| | | JP 2023-524313 A | 09 June 2023 |
| | | WO 2021-227000 A1 | 18 November 2021 |

Form PCT/ISA/210 (patent family annex) (July 2022)